# EUROPEAN PATENT APPLICATION

(11) **EP 4 657 946 A1**
(43) Date of publication of application: **03.12.2025**
(21) Application number: 23941949.2
(22) Date of filing: 21.06.2023
(51) Int. Cl.: H04W 72/0453

(54) **DATA TRANSMISSION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); LIANG, Bin, Dongguan, Guangdong 523860 (CN)
(74) Representative: Penza, Giancarlo
(86) International application number: PCT/CN2023/101806
(87) International publication number: WO 2024/259658

(57) **Abstract**

Embodiments of the present application provide a data transmission method, a device, and a storage medium. The method comprises: a terminal device sends or receives a first number of physical channels, wherein the first number of physical channels include a first physical channel and a second physical channel, frequency domain resources of the first physical channel and frequency domain resources of the second physical channel belong to different frequency domain resource sets, different frequency domain resource sets have different frequency domain resources, the first number is greater than 1, and the first number of physical channels are used for transmitting first information.

## Description

### TECHNICAL FIELD

Embodiments of the present disclosure relate to the technical field of mobile communications, and more particularly to, methods and devices for data transmission, and a storage medium.

### BACKGROUND

In order to improve transmission reliability, repetition of one physical channel is supported in a New Radio (NR) system. In the related art, the repetition of one physical channel in the time domain means that in order to improve the reliability of the physical channel, more time-domain resources are required for transmission of the physical channel, and the corresponding transmission delay may be significantly increased.

### SUMMARY

Embodiments of the present disclosure provide methods and devices for data transmission, and a storage medium.

The method for data transmission provided by the embodiment of the present disclosure includes following operation.

A terminal device sends or receives a first number of physical channels, where the first number of physical channels include a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

The method for data transmission provided by the embodiment of the present disclosure includes following operation.

A network device sends or receives a first number of physical channels, where the first number of physical channels include a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

A terminal device provided by the embodiment of the present disclosure includes a first communicating unit.

The first communicating unit is configured to send or receive a first number of physical channels, where the first number of physical channels include a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

A network device provided by the embodiment of the present disclosure includes a second communicating unit.

The second communicating unit is configured to send or receive a first number of physical channels, where the first number of physical channels include a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

The communication device provided by the embodiment of the present disclosure may be the terminal device in the aforementioned solutions, and the communication device includes a processor and a memory. The memory is configured to store computer programs, and the processor is configured to invoke and execute the computer programs stored in the memory to perform the method for data transmission performed by the terminal device.

The communication device provided by the embodiment of the present disclosure may be the network device in the aforementioned solutions, and the communication device includes a processor and a memory. The memory is configured to store computer programs, and the processor is configured to invoke and execute the computer programs stored in the memory to perform the method for data transmission performed by the network device.

The chip provided by the embodiment of the present disclosure is configured to implement the methods for data transmission described above.

Specifically, the chip includes a processor configured to invoke and execute computer programs from a memory, to enable a device on which the chip is mounted to perform the methods for data transmission described above.

The computer-readable storage medium provided by the embodiment of the present disclosure is configured to store computer programs that cause a computer to perform the methods for data transmission described above.

The computer program product provided by the embodiment of the present disclosure includes computer program instructions that cause a computer to perform the methods for data transmission described above.

The computer program provided by the embodiment of the present disclosure causes, when the computer program is executed on the computer, a computer to perform the methods for data transmission described above.

According to above technical solutions, the network device sends or receives the first number of physical channels, and the terminal device receives or sends the first number of physical channels, where the first number of physical channels include the first physical channel and the second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information. In this way, the repetition is performed on different frequency-domain resources in the frequency domain, and the transmission delay is significantly reduced while high reliability is provided.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of a scenario to which an embodiment of the present disclosure is applied;
FIG. 2 is a schematic diagram of multi-carrier according to an embodiment of the present disclosure;
FIG. 3 is an optional first flowchart of a method for data transmission according to an embodiment of the present disclosure;
FIG. 4 is an optional second flowchart of a method for data transmission according to an embodiment of the present disclosure;
FIG. 5 is a first schematic diagram of time-domain resources of physical channels according to an embodiment of the present disclosure;
FIG. 6 is a second schematic diagram of time-domain resources of physical channels according to an embodiment of the present disclosure;
FIG. 7 is a third schematic diagram of time-domain resources of physical channels according to an embodiment of the present disclosure;

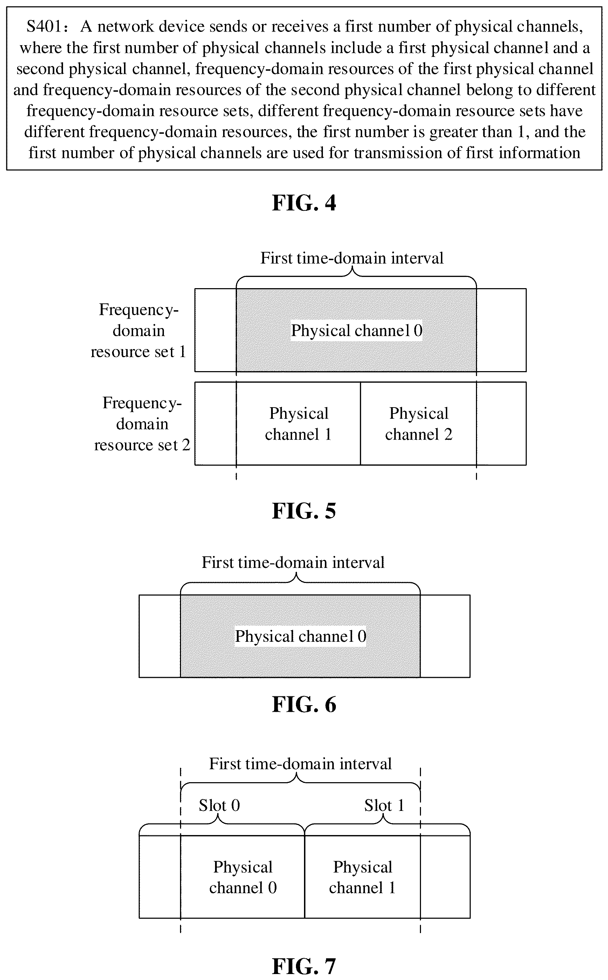

FIG. 7 is a fourth schematic diagram of time-domain resources of physical channels according to an embodiment of the present disclosure;
FIG. 7 is a fifth schematic diagram of time-domain resources of physical channels according to an embodiment of the present disclosure;

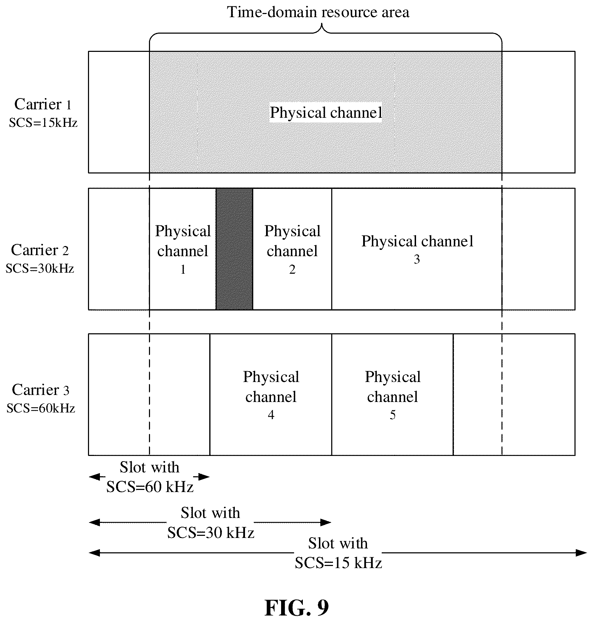

FIG. 9 is a sixth schematic diagram of time-domain resources of physical channels according to an embodiment of the present disclosure;

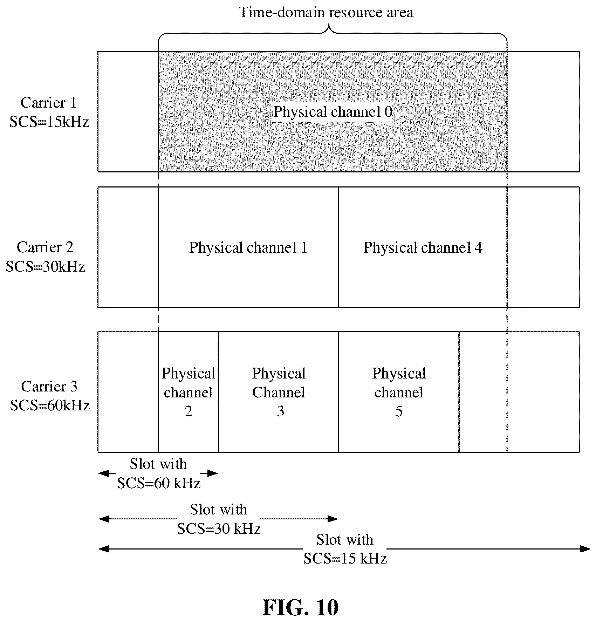

FIG. 10 is a first schematic diagram of indexing physical channels according to an embodiment of the present disclosure;

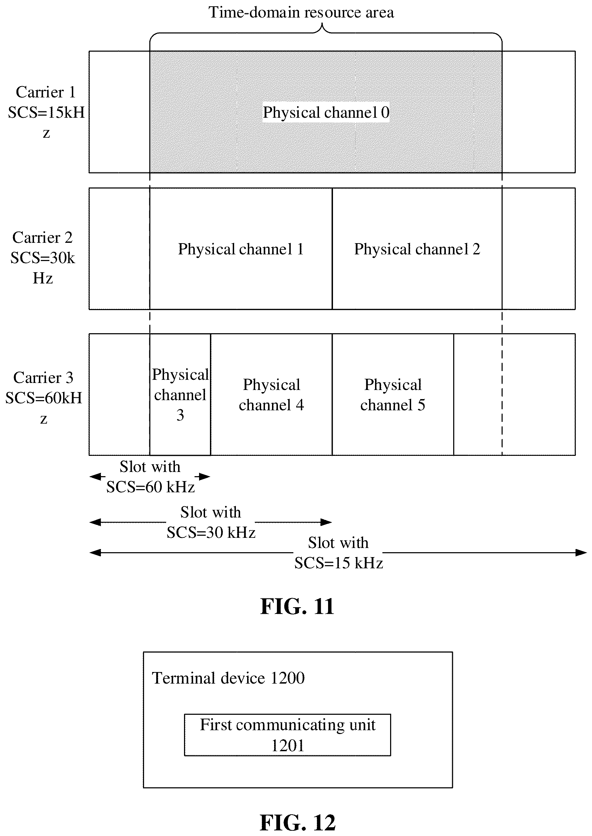

FIG. 11 is a second schematic diagram of indexing physical channels according to an embodiment of the present disclosure;
FIG. 12 is an optional schematic structural diagram of a terminal device according to an embodiment of the present disclosure;

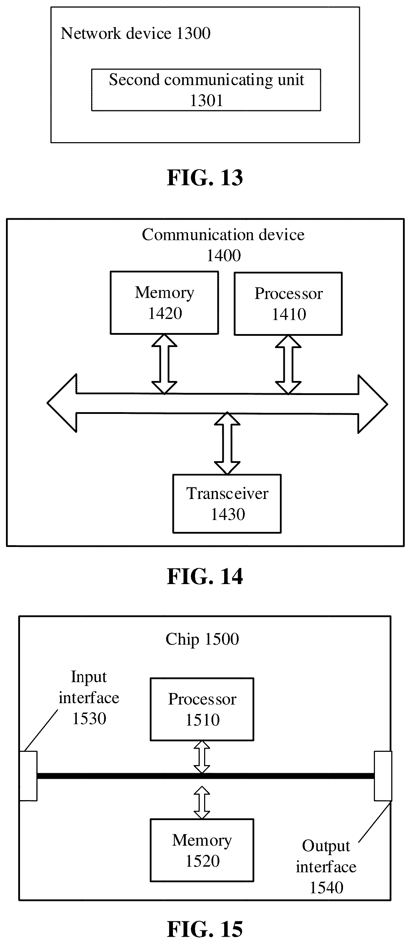

FIG. 13 is an optional schematic structural diagram of a network device according to an embodiment of the present disclosure;
FIG. 14 is a schematic structural diagram of a communication device according to an embodiment of the present disclosure;
FIG. 15 is a schematic structural diagram of a chip according to an embodiment of the present disclosure; and

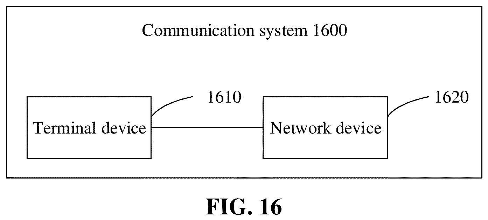

FIG. 16 is a schematic block diagram of a communication system according to an embodiment of the present disclosure.

### DETAILED DESCRIPTION

The technical solutions in the embodiments of the present disclosure will be described below in combination with the accompanying drawings in the embodiments of the present disclosure. It is apparent that the described embodiments are partial embodiments of the present disclosure but not all of the embodiments. Based on the embodiments in the present disclosure, all other embodiments obtained by those of ordinary skill in the art without creative work shall fall within the scope of protection of the present disclosure.

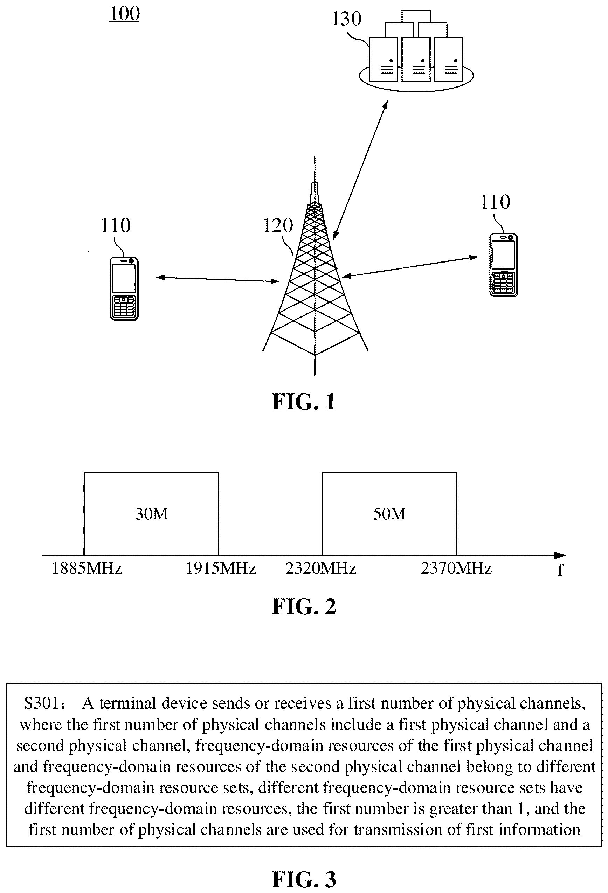

FIG. 1 is a schematic diagram of a scenario to which an embodiment of the present disclosure is applied.

As illustrated in FIG. 1, the communication system 100 includes a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrated with reference to the communication system 100 only, but are not limited thereto. In other words, the technical solutions of the embodiments of the present disclosure may be applied to various communication systems, such as a Long Term Evolution (LTE) system, an LTE Time Division Duplex (TDD), a universal mobile telecommunication system (UMTS), an Internet of things (IoT) system, a Narrow Band Internet of Things (NB-IoT) system, an Enhanced Machine-Type Communications (eMTC) system, a 5-th Generation (5G) communication system (also referred to as a New Radio (NR) communication system), or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 (e.g., a User Equipment (UE)) in the coverage.

The network device 120 may be an evolutional node B (eNB or eNodeB) in an LTE system, a Next Generation Radio Access Network (NG RAN) device, a base station (gNB) in an NR system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, which includes, but not limited to, a terminal device that has a wired or wireless connection to the network device 120 or other terminal devices.

For example, the terminal device 110 may be an access terminal, a UE, a user unit, a user station, a mobile station, a mobile platform, a remote station, a remote terminal, a mobile device, a user terminal, a terminal, a wireless communications device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 110 may be applied to Device to Device (D2D) communication.

The wireless communication system 100 may further include a core network device 130 that communicates with the network deice 120. The core network device 130 may be a 5G core (5GC) device, such as an Access and Mobility Management Function (AMF), an Authentication Server Function (AUSF), a User Plane Function (UPF), or a Session Management Function (SMF). In an embodiment, the core network device 130 may also be an Evolved Packet Core (EPC) device in the LTE network, for example, a Session Management Function + Core Packet Gateway (SMF+PGW-C) device. It is to be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

A connection may be established between various functional units in the communication system 100 through a Next Generation (NG) interface, to realize communication.

For example, the terminal device may establish an air interface connection with the access network device through a Uu interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish a control plane signaling connection with the AMF through an NG interface 2 (abbreviated as N2). The UPF may establish a control plane signaling connection with the SMF through an NG interface 4 (abbreviated as N4). The UPF may exchange the user plane data with a data network through an NG interface 6 (abbreviated as N6). The AMF may establish a control plane signaling connection with the SMF through an NG interface 11 (abbreviated as N11). The SMF may establish a control plane signaling connection with a policy control function (PCF) through an NG interface 7 (abbreviated as N7).

One base station, one core network device and two terminal devices are exemplarily illustrated in FIG. 1. Optionally, the wireless communication system 100 may include multiple base stations, and another number of terminal devices may be included in the coverage of each base station, which is not limited in the embodiments of the present disclosure.

It is to be noted that FIG. 1 only illustrates the system to which the present disclosure is applicable by way of example. Of course, the methods illustrated in the embodiments of the present disclosure may also be applicable to other systems. Moreover, the terms "system" and "network" the present disclosure are usually interchangeably used herein. The term "and/or" herein only is used to indicate an association relationship for describing the associated objects, and represents that three kinds of relationships may exist. For example, "A and/or B" may represent three conditions, i.e., independent existence of A, existence of both A and B, and independent existence of B. In addition, the character "/" herein usually represents that the previous and next associated objects form an "or" relationship. It should also be understood that the term "indicate" referred to in the embodiments of the present disclosure may be a direct indication or an indirect indication, and may also be indicative of an associated relationship. For example, "A indicates B", which may mean that A directly indicates B, e.g., B may be obtained through A. It may further mean that A indirectly indicates B, e.g., A indicates C, and B may be obtained through C. It may further mean that there is an association between A and B. It should also be understood that the term "corresponding" referred to in the embodiments of the present disclosure may represent that there is a direct correspondence or an indirect correspondence between the two objects, or may further represent that there is an association relationship between the two objects, a relationship between the indication and the object to be indicated, or a relationship between the configuration and the object to be configured, etc. It should also be understood that the phrase "predefined" or "predefined rules" referred to in the embodiments of the present disclosure may be implemented by pre-storing corresponding codes, tables, or by other means that may be used to indicate relevant information in devices (such as terminal devices and network devices). The specific implementations of which are not limited in the present disclosure. For example, the "predefined" may refer to what is defined in a protocol. It should also be understood that the "protocol" in the embodiments of the present disclosure may be a standard protocol in the communication field, such as an LTE protocol, an NR protocol, and related protocols applied in future communication systems, which is not limited in the present disclosure.

In order to facilitate understanding of the technical solutions of the embodiments of the present disclosure, related technologies of the embodiments of the present disclosure are described below. The following related technologies used as optional solutions may be combined with technical solutions of the embodiments of the present disclosure in various ways, and the combinations belong to the scope of protection of the embodiments of the present disclosure.

Each of the operators has multiple non-contiguous narrow bandwidth frequency band resources. For example, a operator A is allocated with 30 M bandwidth within the 1.9 GHz frequency band, 15 M bandwidth within the 2.0 GHz frequency band, 50 M bandwidth within the 2.3 GHz frequency band, etc.; the operator B is allocated with 20 M bandwidth within the 1.7 GHZ frequency band, 20 M bandwidth within the 1.8 GHz frequency band, 20 M bandwidth within the 2.3 GHz frequency band, 20 M bandwidth within the 2.5 GHz frequency band, etc.; and the operator C is allocated with 15 M bandwidth within the 1.7 GHZ frequency band, 15 M bandwidth within the 1.8 GHz frequency band, 20 M bandwidth within the 2.3 GHz frequency band, 20 M bandwidth within the 2.6 GHz frequency band, etc.

The maximum bandwidth of 100 M in the frequency band below 6 GHz may be supported in the NR system. One manner of deploying the NR system by using existing frequency-domain resources is to adopt the Carrier Aggregation (CA) technology. That is to say, the UE is configured with multiple serving cells, and the UE may simultaneously receive/send data in the multiple cells. FIG. 2 is taken as an example, the UE is configured with two serving cells, and their bandwidths are 30 M from 1885 MHz to 1915 MHz, and 50 M from 2320 MHz to 2370 MHz, respectively. In this case, the maximum transmission bandwidth of the UE is equivalent to 80 M.

There are redundant transmissions of some information in the operating manner of the CA. For example, each component carrier is able to operating independently, i.e., one component carrier operates independently as one serving cell. Therefore, the synchronization signal, system information, etc. are sent/received in each component carrier. For the UE configured with the CA, it is obviously redundant to read multiple sets of system information. If the multiple component carriers are able to be managed uniformly, such as sharing system information, the total overheads in the system can be significantly reduced. Therefore, a new multi-carrier operating scheme is proposed, i.e., the multiple carriers operate together as one serving cell. The Synchronization Signal/Physical Broadcast Channel (PBCH) Block (SSB) for implementing the cell search may be sent/received within only one carrier. After the UE reads the system information in one carrier, the UE is able to obtain configuration information on the multiple carriers.

In order to improve the transmission reliability, the repetition of one physical channel is supported in the NR system. In the related art, the repetition occurs at different moments in the time domain, which means that in order to improve the reliability of the physical channel, more time-domain resources are required for transmission of the physical channel, and the corresponding transmission delay may be significantly increased. For example, for the delay-sensitive services such as the Extended Reality (XR) and the Ultra-Reliable Low Latency (URLLC) services, the repetition in the time domain is obviously not ideal.

For convenience of understanding the technical solutions of the embodiments of the present disclosure, the technical solutions in the present disclosure are described below through the detailed embodiments. The aforementioned related technologies, used as optional solutions, may be combined with the technical solutions of the embodiments of the present disclosure in various ways, and the combinations shall fall within the scope of the protection of the embodiments of the present disclosure. The embodiments of the present disclosure include at least part of the following contents.

A method for data transmission provided by an embodiment of the present disclosure is applied to a terminal device, as illustrated in FIG. 3, and includes operation S301.

In operation S301, the terminal device sends or receives a first number of physical channels, where the first number of physical channels include a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

A method for data transmission provided by an embodiment of the present disclosure is applied to a network device, and as illustrated in FIG. 4, includes operation S401.

In operation S401, the network device sends or receives a first number of physical channels, where the first number of physical channels include a first physical channel and a second physical channel, first frequency-domain resources of the first physical channel and second frequency-domain resources of the second physical channel belong to different frequency-domain resource sets, different frequency-domain resource sets have different frequency-domain resources, the first number is greater than 1, and the first number of physical channels are used for transmission of first information.

The methods for data transmission provided by the embodiments of the present disclosure are applied to a communication system including a terminal device and a network device, where the terminal device is configured to perform the method for data transmission illustrated in FIG. 3, and the network device is configured to perform the method for data transmission illustrated in FIG. 4.

In the embodiments of the present disclosure, the terminal device and the network device interact with the first number of physical channels, and the first number of physical channels are used for transmission of same information. That is to say, the first number of physical channels are used for the repetition, and the information sent/received on each of the first number of physical channels includes the first information.

In a scenario where the first physical channel is sent by the terminal device, the first number of physical channels are uplink physical channels, such as Physical Uplink Shared Channel (PUSCH).

In a scenario where the first physical channel is received by the terminal device, the first number of physical channels are downlink physical channels, such as Physical Downlink Shared Channel (PDSCH).

The physical channel being the PUSCH is taken as an example, the terminal device sends the first number of PUSCHs to the network device, the network device receives the first number of PUSCHs, and the first number of PUSCHs are used for transmission of the same information.

The physical channel being the PDSCH is taken as an example, the network device sends the first number of PDSCHs to the terminal device, the terminal device receives the first number of PDSCHs, and the first number of PDSCHs are used for transmission of the same information.

The first number of physical channels include a first physical channel and a second physical channel, the frequency-domain resources of the first physical channel belong to the first frequency-domain resource set, the frequency-domain resources of the second physical channel belong to the second frequency-domain resource set, and the frequency-domain resources of the first frequency-domain resource set are different from the frequency-domain resources of the second frequency-domain resource set.

It is to be understood that the frequency-domain resources of the physical channel may be understood as frequency-domain resources occupied by the physical channel or frequency-domain resources allocated or configured for the physical channel.

It is to be understood that the first number of physical channels include physical channels having frequency-domain resources belonging to different frequency-domain resource sets, or physical channels sent/received on different frequency-domain resource sets.

In the embodiment of the present disclosure, the first number of physical channels are sent/received on the second number of frequency-domain resource sets, different frequency-domain resource sets among the second number of frequency-domain resource sets have different frequency-domain resources, the second number is greater than 1, and the first number is greater than or equal to the second number.

If the first number is equal to the second number, one physical channel is sent/received on one frequency-domain resource set, and different physical channels are sent/received on different frequency-domain resource sets.

If the first number is greater than the second number, at least one physical channel is sent/received on one frequency-domain resource set. The different physical channels sent/received on different frequency-domain resource sets have different frequency-domain resources, and the physical channels sent/received on the same frequency-domain resource set have the same frequency-domain resources.

In some embodiments, the first number of physical channels include a third physical channel and a fourth physical channel, frequency-domain resources of the third physical channel and frequency-domain resources of the fourth physical channel belong to a same frequency-domain resource set, and time-domain resources of the third physical channel are different from time-domain resources of the fourth physical channel.

The third physical channel and the fourth physical channel are physical channels sent/received on the same frequency-domain resource, i.e., two different physical channels having frequency-domain resources belonging to a same frequency-domain resource set.

It is to be understood that any one of the third physical channel and the fourth physical channel may also be considered as the first physical channel or the second physical channel.

If at least two physical channels are sent/received on one frequency-domain resource set, different physical channels among the at least two physical channels sent/received on the frequency-domain resource have different time-domain resources.

In the embodiment of the present disclosure, the frequency-domain resource set includes one of: a carrier, a Bandwidth Part (BWP), at least one subcarrier, and at least one Resource Block (RB).

In an example, the frequency-domain resource set is the carrier, and following four physical channels are sent/received on three carriers including carrier 0, carrier 1, and carrier 2: a physical channel 0, a physical channel 1, a physical channel 2 and a physical channel 3. The carrier 0, the carrier 1 and the carrier 2 have different frequency-domain resources. The physical channel 0 and the physical channel 1 are sent/received on the carrier 0, the physical channel 2 is sent/received on the carrier 1, and the physical channel 4 is sent/received on the carrier 3. The frequency-domain resources occupied by the physical channel 0 and the physical channel 1 belong to the carrier 0, the frequency-domain resources occupied by the physical channel 2 belong to the carrier 1, and the frequency-domain resources occupied by the physical channel 2 belong to the carrier 2. The physical channel 0 and the physical channel 1 occupy same frequency-domain resources but different frequency-domain resources; and the frequency-domain resources occupied by the physical channel 0 (or physical channel 1) are different from the frequency-domain resources occupied by the physical channel 2, and the frequency-domain resources occupied by the physical channel 3.

According to the method for data transmission, the network device sends or receives the first number of physical channels, and the terminal device receives or sends the first number of physical channels, where the first number of physical channels include the first physical channel and the second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information. In this way, the repetition is performed on different frequency-domain resources in the frequency domain, and the transmission delay is significantly reduced while high reliability is provided.

In some embodiments, a manner of determining the time-domain resources of the first physical channel includes one of following two manners.

In the first manner of determining the time-domain resources, the time-domain resources of the first physical channel is determined based on one of at least two pieces of first time-domain resource indication information included in first configuration information.

In the second manner of determining the time-domain resources, the time-domain resources of the first physical channel is determined based on one piece of second time-domain resource indication information included in second configuration information.

Herein, the first physical channel is one of the first number of physical channels. The second physical channel is another physical channel different from the first physical channel among the first number of physical channels, where the first physical channel is relative to the second physical channel. For example, among the physical channel 0 and the physical channel 1, the first physical channel may be considered as the physical channel 0, and the second physical channel may be considered as the physical channel 1; or the first physical channel may be considered as the physical channel 1, and the second physical channel may be considered as the physical channel 0. Therefore, any one of the first number of physical channels may be understood as the first physical channel, and a manner of determining the time-domain resources occupied by any one of the physical channels may be described as the manner of determining the time-domain resources occupied by the first physical channel.

It is to be understood that the time-domain resources of the physical channel may be understood as time-domain resources occupied by the physical channel or time-domain resources allocated or configured for the physical channel.

In the first manner of determining the time-domain resources, the terminal device or the network device determines the time-domain resources of the first physical channel based on one of the multiple pieces of first time-domain resource indication information included in the first configuration information.

The first configuration information is directly used for configuring the time-domain resources of each of the first number of physical channels. Herein, the first configuration information includes multiple pieces of first time-domain resource indication information, and the time-domain resources of one of the first number of physical channels are determined based on one piece of the first time-domain resource indication information. One piece of first time-domain resource indication information is used for determining positions and/or the number of time-domain symbols occupied by a respective one of physical channels or a physical channel in a respective one of frequency-domain resource set.

The first configuration information includes one of: downlink control information or higher layer signaling.

In some embodiments, the first time-domain resource indication information may be Time-Domain Resource Allocation (TDRA) information included in the first configuration information.

In some embodiments, a number of pieces of first time-domain resource indication information included in the first configuration information is less than or equal to the first number.

If the number of pieces of the first time-domain resource indication information included in the first configuration information is equal to the first number, one piece of the first time-domain resource indication information is used for indicating time-domain resources occupied by one physical channel.

If the number of pieces of the first time-domain resource indication information included in the first configuration information is less than the first number, one piece of the first time-domain resource indication information is used for indicating time-domain resources occupied by one or more physical channels.

In some embodiments, one piece of the first time-domain resource indication information is used for indicating time-domain resources of one physical channel; or one piece of the first time-domain resource indication information is used for determining time-domain resources of one or more physical channels sent/received in one frequency-domain resource set.

If one piece of the first time-domain resource indication information is used for indicating time-domain resources of one physical channel, different physical channels are indicated based on different pieces of first time-domain resource indication information, thereby realizing that the time-domain resources occupied by different physical channels are independently configured.

In an example, the first configuration information includes the following first time-domain resource indication information: information A, information B, and information C, and the first configuration information is used for indicating time-domain resources occupied by the following three physical channels: a physical channel 0, a physical channel 1, and a physical channel 2. Herein, the information A indicates time-domain resources occupied by the physical channel 0, the information B indicates time-domain resources occupied by the physical channel 1, and the information C indicates time-domain resources occupied by the physical channel 2.

If one piece of the first time-domain resource indication information is used for determining time-domain resources of one or more physical channels sent/received in one frequency-domain resource set, the time-domain resources of different physical channels sent/received on one frequency-domain resource are determined based on the same first time-domain resource indication information, and the physical channels sent/received on different frequency-domain resource sets are indicated based on different pieces of first time-domain resource indication information, thereby realizing that the time-domain resources occupied by the physical channels of different frequency-domain resource sets are independently configured.

In an example, the first configuration information includes the following first time-domain resource indication information: information A, information B, and information C, and the first configuration information is used for determining time-domain resources occupied by the physical channels in following three frequency-domain resource sets: a frequency-domain resource set 0, a frequency-domain resource set 1 and a frequency-domain resource set 2. Herein, a physical channel 0 is sent/received on the frequency-domain resource set 0, a physical channel 1 is sent/received on the frequency-domain resource set 1, and a physical channel 2 is sent/received on the frequency-domain resource set 2. Then, the information A indicates time-domain resources occupied by the physical channel 0, the information B indicates time-domain resources occupied by the physical channel 1, and the information C indicates time-domain resources occupied by the physical channel 2.

In an example, the first configuration information includes the following first time-domain resource indication information: information A, information B, and information C, and the first configuration information is used for determining time-domain resources occupied by the physical channels in following three frequency-domain resource sets: a frequency-domain resource set 0, a frequency-domain resource set 1 and a frequency-domain resource set 2. Herein, a physical channel 0 and a physical channel 1 are sent/received on the frequency-domain resource set 0, the physical channel 2 is sent/received on the frequency-domain resource set 1, and a physical channel 3 is sent/received on the frequency-domain resource set 2. Then, the information A determines time-domain resources occupied by the physical channel 0 and the physical channel 1, the information B indicates time-domain resources occupied by the physical channel 2, and the information C indicates time-domain resources occupied by the physical channel 3.

It is to be understood that if one piece of first time-domain resource indication information is used for determining time-domain resources of physical channels in one frequency-domain resource set, and one frequency-domain resource set includes multiple physical channels, then the first time-domain resource indication information is used for indicating a time-domain interval constituted by time-domain resources occupied by the multiple physical channels included in the frequency-domain resource set, and the time-domain resources occupied by each physical channel belong to the time-domain interval. Herein, the physical channels in one frequency-domain resource set may be understood as physical channels sent/received in or on the frequency-domain resource set.

In first manner of configuring the time-domain resources, the time-domain resources occupied by different physical channels or time-domain resources occupied by physical channels in different frequency-domain resource sets are independently configured by different pieces of first time-domain resource indication information, thereby realizing flexible configuration of the time-domain resources.

In the second manner of determining the time-domain resources, the terminal device or the network device determines the time-domain resources of the first physical channel based on one piece of second time-domain resource indication information included in the second configuration information.

Herein, the second configuration information includes one piece of second time-domain resource indication information, and the time-domain resources occupied by each of the first number of physical channels are determined based on the second time-domain resource indication information. The second time-domain resource indication information is used for indicating positions and/or the number of time-domain symbols occupied by physical channels in one frequency-domain resource set.

The second configuration information includes one of: downlink control information or higher layer signaling.

In some embodiments, the second time-domain resource indication information may be TDRA information included in the second configuration information.

In the second manner of determining the time-domain resources, the time-domain resources of at least one physical channel in different frequency-domain resource sets are determined based on one piece of second time-domain resource indication information, so that time-domain resources of multiple physical channels are obtained according to one piece of second time-domain resource indication information. Therefore, signaling overhead is small.

In some embodiments, the time-domain resources of the first physical channel are determined based on the second time-domain resource indication information and a first SubCarrier Spacing (SCS).

The second time-domain resource indication information is used for indicating positions and/or the number of time-domain symbols occupied by physical channels in one frequency-domain resource set. Different frequency-domain resource sets or physical channels on different frequency-domain resource sets correspond to different SCSs or correspond to a same SCS. If different frequency-domain resource sets or physical channels on different frequency-domain resource sets correspond to different SCSs, time-domain units occupied by the different frequency-domain resource sets or occupied by the physical channels on the different frequency-domain resource sets have different sizes, and the time-domain unit may include: a slot and a time-domain symbol.

The terminal device or the network device uses the first SCS as a reference SCS, and determines, according to the second time-domain resource indication information and the first SCS, the time-domain resources occupied by the physical channels in one frequency-domain resource set.

In some embodiments, the first SCS is configured by the network device, agreed in a protocol, or determined according to an agreed first rule.

If the first SCS is configured by the network device, the network device may directly configure the first SCS. The network device may configure one frequency-domain resource set, and the first SCS is an SCS corresponding to the frequency-domain resource set. In some embodiments, the frequency-domain resource set configured by the network device may be one of a second number of frequency-domain resource sets.

The first rule includes one of following rules.

According to the first rule, a smallest SCS or largest SCS among at least two SCSs corresponding to the first number of physical channels.

According to the second rule, a smallest SCS or largest SCS among at least two SCSs corresponding to a second number of frequency-domain resource sets where the first number of physical channels are located.

According to the third rule, an SCS corresponding to a frequency-domain resource set having a largest or smallest sequence number among the second number of frequency-domain resource sets where the first number of physical channels are located.

In some embodiments, the time-domain resources of the first physical channel belong to a first time-domain interval, and the first time-domain interval is determined based on the second time-domain resource indication information and the first SCS; or
the time-domain resources of the first physical channel is determined based on the second time-domain resource indication information, the first SCS, and a second SCS, where the second SCS is an SCS corresponding to the first physical channel or an SCS corresponding to a first frequency-domain resource set where the first physical channel is located.

In a scenario where the time-domain resources of the first physical channel belong to the first frequency-domain interval, the terminal device or the network device determines the first frequency-domain interval according to the second time-domain resource indication information and the first SCS, and determines the time-domain resources of the first physical channel according to the first frequency-domain interval.

The terminal device determines a first time-domain interval of one frequency-domain resource set in the time domain as the time-domain resources occupied by the physical channels in the frequency-domain resource set. In this case, the time-domain resources occupied by the first physical channel include time-domain symbols belonging to the first time-domain interval. Physical channels in different frequency-domain resource sets occupy the same time-domain resources.

In an example, the first time-domain interval determined based on the second time-domain resource indication information and the first SCS is as illustrated in FIG. 5, and the time-domain resources occupied by the physical channels in the frequency-domain resource set 1 and the time-domain resources occupied by the physical channels in the frequency-domain resource set 2 are all the first time-domain interval. Herein, the physical channels in the frequency-domain resource set 1 include the physical channel 0, and the physical channels in the frequency-domain resource set 2 include the physical channel 1 and the physical channel 2. Then, the time-domain resources occupied by the physical channel 0 are the first time-domain interval on the frequency-domain resource 1, and the time-domain resources occupied by the physical channel 1 and the physical channel 2 are the first time-domain interval on frequency-domain resource 2.

In some embodiments, if the time-domain resources of the first physical channel belong to the first time-domain interval:
the time-domain resources of the first physical channel are time-domain resources within the first time-domain interval; or
the time-domain resources of the first physical channel are available time-domain resources within the first time-domain interval; or
the time-domain resources of the first physical channel are time-domain resources belonging to one time-domain unit within the first time-domain interval; or
the time-domain resources of the first physical channel are available time-domain resources belonging to one time-domain unit within the first time-domain interval.

The time-domain resources of the first physical channel being the time-domain resources within the first time-domain interval may be understood as that the time-domain resources of the first physical channel include time-domain symbols within the first time-domain interval.

The time-domain resources of the first physical channel being the available time-domain resources within the first time-domain interval may be understood as that the time-domain resources of the first physical channel include available time-domain symbols within the first time-domain interval.

The time-domain resources of the first physical channel being the time-domain resources belonging to one time-domain unit within the first time-domain interval may be understood as that the time-domain resources of the first physical channel are time-domain symbols belonging to one time-domain unit within the first time-domain interval.

The time-domain resources of the first physical channel being the available time-domain resources belonging to one time-domain unit within the first time-domain interval may be understood as that the time-domain resources of the first physical channel are available time-domain symbols belonging to one time-domain unit within the first time-domain interval.

A first restriction may exist or may not exist for the time-domain resources occupied by one physical channel, i.e., transmission across time-domain units is not allowed.

If the first restriction exists for the time-domain resources occupied by the physical channel, the time-domain resources of the physical channel are unable to be sent/received across time-domain units, i.e., only able to be sent/received in one time-domain unit.

If the first restriction does not exist for the time-domain resources occupied by the physical channel, the time-domain resources of the physical channel are able to be sent/received across time-domain units, i.e., able to be sent/received in one or more time-domain units.

The distribution of the time-domain resources of the first physical channel includes one of the following cases.

For the first case, if the first physical channel is able to be sent/received across time-domain units and the first time-domain interval includes one or more time-domain units, the time-domain resources of the first physical channel are the time-domain resource within the first time-domain interval.

For the second case, if the first physical channel is unable to be sent/received across time-domain units and the first time-domain interval belongs to one time-domain unit, the time-domain resources of the first physical channel are the time-domain resources within the first time-domain interval, or the time-domain resources of the first physical channel are the time-domain resources belonging to one time-domain unit within the first time-domain interval.

For the third case, if the first physical channel is unable to be sent/received across time-domain units and the first time-domain interval belongs to multiple time-domain units, the time-domain resources of the first physical channel are the time-domain resources belonging to one time-domain unit within the first time-domain interval.

In an example, as illustrated in FIG. 6, the time-domain resources of the physical channel 0 are the time-domain resources within the first time-domain interval.

In an example, as illustrated in FIG. 7, the time-domain resources of the physical channel 1 are time-domain resources belonging to a slot 0 within the first time-domain interval, and the time-domain resources of the physical channel 2 are time-domain resources belonging to a slot 1 within the first time-domain interval.

It is to be understood that the time-domain resources occupied by one physical channel belong to the available resources within the first time-domain interval.

The distribution of the time-domain resources of the first physical channel includes one of the following cases.

For the fourth case based on the first case, the time-domain resources of the first physical channel are available time-domain resources within the first time-domain interval
For the fifth case based on the second case, the time-domain resources of the first physical channel are the available time-domain resources within the first time-domain interval, or the time-domain resources of the first physical channel are available time-domain resources belonging to one time-domain unit within the first time-domain interval.

For the sixth case based on the third case, the time-domain resources of the first physical channel are available time-domain resources belonging to one time-domain unit within the first time-domain interval.

It is to be understood that the available time-domain resources within the first time-domain interval are time-domain resources other than unavailable time-domain resources within the first time-domain interval. The first time-domain interval includes or does not include the unavailable time-domain resources. In a scenario where the first time-domain interval does not include the unavailable time-domain resources, the available time-domain resources within the first time-domain interval are continuous. In a scenario where the first time-domain interval includes the unavailable time-domain resources, the available time-domain resources within the first time-domain interval are discontinuous.

A second restriction may exist or may not exist for the time-domain resources of one physical channel: being continuous in the time domain.

If the second restriction does not exist for the time-domain resources of one physical channel, the available time-domain resources within the first time-domain interval or the available time-domain resources belonging to one time-domain unit within the first time-domain interval are the time-domain resources of the physical channel.

If the second restriction exists for the time-domain resources of one physical channel, the continuous available time-domain resources within the first time-domain interval or the continuous available time-domain resources belonging to one time-domain unit within the first time-domain interval are the time-domain resources of the physical channel. If the available time-domain resources of the first time-domain interval are divided into multiple continuous available time-domain resources based on the unavailable resources, the time-domain resources of the first time-domain interval include time-domain resources of multiple physical channels. If the available time-domain resources belonging to one time-domain unit of the first time-domain interval are divided into multiple continuous available time-domain resources based on the unavailable resources, the available time-domain resources belonging to the time-domain unit within the first time-domain interval include time-domain resources of multiple physical channels.

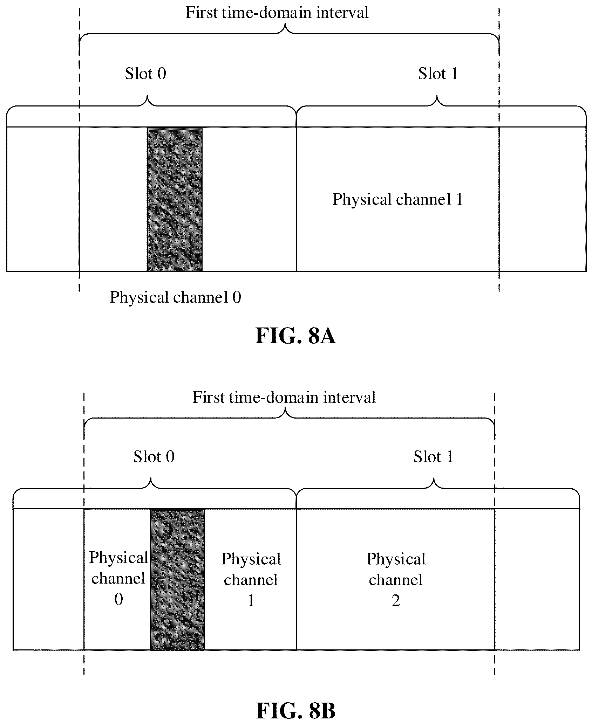

In an example, as illustrated in FIG. 8A, the second restriction does not exist for the time-domain resources of one physical channel, the time-domain resources of the physical channel 0 are available time-domain resources belonging to the slot 0 within the first time-domain interval and are discontinuous in the time domain; and the time-domain resources of the physical channel 1 are available time-domain resources belonging to the slot 1 within the first time-domain interval.

In an example, as illustrated in FIG. 8B, the second restriction exists for the time-domain resources of one physical channel, the time-domain resources of the physical channel 0 are available time-domain resources 1 belonging to the slot 0 within the first time-domain interval, the time-domain resources of the physical channel 1 are available time-domain resources 2 belonging to the slot 0 within the first time-domain interval, and the time-domain resources of the physical channel 2 are available time-domain resources belonging to the slot 1 within the first time-domain interval.

Herein, in FIG. 8A and FIG. 8B, the shadow area is the unavailable time-domain resources belonging to the slot 0 within the first time-domain interval, and among the time-domain resources belonging to the slot 0 within the first time-domain interval, the unavailable time-domain resources are preceded by the available time-domain resources 1 belonging to the slot 0 within the first time-domain interval, and the unavailable resources are followed by the available time-domain resources 2 belonging to the slot 0 within the first time-domain interval.

In some embodiments, the available time-domain resources within the first time-domain interval are time-domain resources other than unavailable time-domain resources within the first time-domain interval, and the unavailable time-domain resources include at least one of:
a symbol with a conflicting transmission direction;
a symbol occupied by a Synchronizing Signal Block (SSB);
an unavailable symbol configured by a network device;
a symbol occupied by a reference signal; or
a symbol occupied by a Control-Resource Set (CORESET).

Whether a symbol, i.e., the time-domain symbol, is the symbol with the conflicting transmission direction is determined based on the transmission direction of the physical channel. If the physical channel is an uplink physical channel, a symbol used for downlink transmission, i.e., the downlink symbol, or a symbol having a flexible transmission direction, i.e., a flexible symbol, belongs to the symbol with the conflicting transmission direction. If the physical channel is a downlink physical channel, a symbol used for uplink transmission, i.e., the uplink symbol, or a symbol having a flexible transmission direction, i.e., a flexible symbol, belongs to the symbol with the conflicting transmission direction.

The reference signal includes one or more of: a Channel Status Indicator Reference Signal (CSI-RS), a Sounding Reference Signal (SRS), etc.

In some embodiments, if a number of symbols included in the time-domain resources belonging to one time-domain unit within the first time-domain interval or included in the available time-domain resources belonging to one time-domain unit within the first time-domain interval is less than a third number, the time-domain resources belonging to one time-domain unit within the first time-domain interval or the available time-domain resources belonging to one time-domain unit within the first time-domain interval are not used for receiving or sending the first physical channel.

In this case, the number of symbols included in the time-domain resources of the first physical channel is larger than the third number. The third number may be configured by the network device, or preset, or agreed in the protocol.

In a scenario where the time-domain resources of the first physical channel are determined based on the second time-domain resource indication information, the first SCS and the second SCS, the terminal device or the network device determines the time-domain resources of the first physical channel according to the second time-domain resource indication information, the first SCS and the second SCS.

It is to be understood that the second time-domain resource indication information and the first SCS are used for determining the first time-domain interval. Herein, when the time-domain resources of the first physical channel are determined, the first time-domain interval is not required to be determined, and the time-domain resources of the first physical channel are directly determined according to the second time-domain resource indication information, the first SCS and the second SCS.

The first frequency-domain resource set where the first physical channel is located may be understood as that the frequency-domain resources of the first physical channel belong to the first frequency-domain resource set.

In some embodiments, the time-domain resources of the first physical channel are determined based on the second time-domain resource indication information and a first parameter, where the first parameter is associated with the first SCS and the second SCS.

The second SCS is the same as or different from the first SCS. In an example, the first SCS is 15 KHz and the second SCS is 15 KHz. In an example, the first SCS is 15 KHz and the second SCS is 30 KHz. In an example, the first SCS is 30 KHz and the second SCS is 15 KHz.

The terminal device or the network device determines the first parameter based on the first SCS and the second SCS. In an example, the first parameter is a ratio of the second SCS to the first SCS. In an example, the first parameter is a ratio of the first SCS to the second SCS.

The terminal device or the network device determines a symbol index S of a starting symbol and/or the symbol number L indicated by the second time-domain resource indication information, determines the symbol index of the starting symbol of the first physical channel according to S and the first parameter and/or determines the number of symbols included in the time-domain resources of the first physical channel according to L and the first parameter.

In an example, the first parameter is the ratio of the second SCS to the first SCS, the symbol index of the starting symbol of the first physical channel is S multiplied by the first parameter, and the number of symbols included in the time-domain resources of the first physical channel is L.

In an example, the first parameter is the ratio of the first SCS to the second SCS, the symbol index of the starting symbol of the first physical channel is S divided by the first parameter, and the number of symbols included in the time-domain resources of the first physical channel is L.

In an example, the first parameter is the ratio of the second SCS to the first SCS, the symbol index of the starting symbol of the first physical channel is S, and the number of symbols included in the time-domain resources of the first physical channel is L multiplied by the first parameter.

In an example, the first parameter is the ratio of the first SCS to the second SCS, the symbol index of the starting symbol of the first physical channel is S, and the number of symbols included in the time-domain resources of the first physical channel is L divided by the first parameter.

In an example, the first parameter is the ratio of the second SCS to the first SCS, the symbol index of the starting symbol of the first physical channel is S multiplied by the first parameter, and the number of symbols included in the time-domain resources of the first physical channel is L multiplied by the first parameter.

In an example, the first parameter is the ratio of the first SCS to the second SCS, the symbol index of the starting symbol of the first physical channel is S divided by the first parameter, and the number of symbols included in the time-domain resources of the first physical channel is L divided by the first parameter.

In some embodiments, a manner of determining the frequency-domain resources of the first physical channel includes one of following two manners.

In the first manner of determining the frequency-domain resources, the frequency-domain resources of the first physical channel are determined based on one of at least two pieces of first frequency-domain resource indication information included in third configuration information.

In the second manner of determining the frequency-domain resources, the frequency-domain resources of the first physical channel are determined based on one piece of second frequency-domain resource indication information included in fourth configuration information.

In the first manner of determining the frequency-domain resources, the terminal device or the network device determines the frequency-domain resources of the first physical channel based on one of the multiple pieces of first frequency-domain resource indication information included in the third configuration information.

The third configuration information is directly used for configuring the frequency-domain resources of each of the first number of physical channels. Herein, the third configuration information includes multiple pieces of first frequency-domain resource indication information, and the frequency-domain resources of one of the first number of physical channels are determined based on one piece of the first frequency-domain resource indication information. One piece of first frequency-domain resource indication information is used for determining positions and/or the number of resource blocks occupied by a respective one of physical channels or physical channels in a respective one of frequency-domain resource set.

The third configuration information includes one of: downlink control information or higher layer signaling.

In some embodiments, a number of pieces of first frequency-domain resource indication information included in the third configuration information is less than or equal to the first number.

If the number of pieces of the first frequency-domain resource indication information included in the third configuration information is equal to the first number, one piece of the first frequency-domain resource indication information is used for indicating frequency-domain resources occupied by one physical channel.

If the number of pieces of the first frequency-domain resource indication information included in the third configuration information is less than the first number, one piece of the first frequency-domain resource indication information is used for indicating frequency-domain resources occupied by one or more physical channels in one frequency-domain resource set.

In some embodiments, one piece of the first frequency-domain resource indication information is used for determining frequency-domain resources of one or more physical channels sent/received in one frequency-domain resource set.

If one physical channel is sent/received on one frequency-domain resource set, the first frequency-domain resource indication information corresponding to the frequency-domain resource set indicates the frequency-domain resources of the physical channel. If multiple physical channels are sent/received on one frequency-domain resource set, the first frequency-domain resource indication information is used for indicating the frequency-domain resources occupied by the multiple physical channels, and different physical channels occupy the same frequency-domain resources.

In first manner of configuring the frequency-domain resources, frequency-domain resources occupied by physical channels in different frequency-domain resource sets are independently configured by different pieces of first frequency-domain resource indication information, thereby realizing flexible configuration of the frequency-domain resources.

In the second manner of determining the frequency-domain resources, the terminal device or the network device determines the frequency-domain resources of the first physical channel based on one piece of second frequency-domain resource indication information included in the fourth configuration information.

The fourth configuration information includes one piece of second frequency-domain resource indication information, and the frequency-domain resources of each of the first number of physical channels are determined based on the second frequency-domain resource indication information. The second frequency-domain resource indication information is used for indicating positions and/or the number and/or the bandwidth of RBs occupied by physical channels in one frequency-domain resource set.

The fourth configuration information includes one of: downlink control information or higher layer signaling.

In the second manner of configuring the frequency-domain resources, the frequency-domain resources of physical channels in different frequency-domain resource sets are determined based on one piece of second frequency-domain resource indication information, so that frequency-domain resources of physical channels in multiple frequency-domain resource sets are obtained according to one piece of second frequency-domain resource indication information. Therefore, signaling overhead is small.

In some embodiments, the frequency-domain resources of the first physical channel are determined based on the second frequency-domain resource indication information and the first SCS.

Different frequency-domain resource sets or physical channels on different frequency-domain resource sets correspond to different SCSs or correspond to the same SCS. If different frequency-domain resource sets or physical channels on different frequency-domain resource sets correspond to different SCSs, RBs occupied by the different frequency-domain resource sets or occupied by the physical channels on the different frequency-domain resource sets have different sizes.

The terminal device or the network device uses the first SCS as a reference SCS, and determines, according to the second frequency-domain resource indication information and the first SCS, the frequency-domain resources of one frequency-domain resource set, i.e., the frequency-domain resources occupied by the physical channels in the frequency-domain resource set.

In some embodiments, the frequency-domain resources of the first physical channel are determined based on a first frequency-domain interval, where the first frequency-domain interval is determined based on the second frequency-domain resource indication information and the first SCS; or
the frequency-domain resources of the first physical channel are determined based on the second frequency-domain resource indication information, the first SCS and a second SCS, where the second SCS is an SCS corresponding to the first physical channel or an SCS corresponding to a first frequency-domain resource set where the first physical channel is located.

In the scenario where the frequency-domain resources of the first physical channel are determined based on the first frequency-domain interval and the first frequency-domain interval is determined based on the second frequency-domain resource indication information and the first SCS, the terminal device or the network device determines the first frequency-domain interval according to the second frequency-domain resource indication information and the first SCS, and determines the frequency-domain resources of the first physical channel according to the first frequency-domain interval.

The second frequency-domain resource indication information indicates a starting RB and/or the number of RBs and/or the bandwidth occupied by the RBs, but the size of one RB is determined based on the first SCS. Therefore, the second frequency-domain resource indication information and the first SCS are able to determine a frequency-domain interval having a fixed size, i.e., the first frequency-domain interval.

In some embodiments, at least one of following is the same for the frequency-domain resources of the first physical channel and the first frequency-domain interval: a starting Resource Block (RB), a number of RBs, or a bandwidth occupied by the RBs.

In an example, the frequency-domain resources of each frequency-domain resource set use the same starting RB and the same number of RBs. In this case, the starting RB of the frequency-domain resources of the first physical channel is the same as the starting RB of the first frequency-domain interval, and the number of RBs of the frequency-domain resources of the first physical channel is the same as the number of RBs of the first frequency-domain interval.

In an example, the starting RB of the frequency-domain resources of the first physical channel is the same as the starting RB of the first frequency-domain interval, but the bandwidth occupied by the RBs of the frequency-domain resources of the first physical channel is the same as the bandwidth occupied by the RBs of the first frequency-domain interval.

In an example, the starting RB of the frequency-domain resources of the first physical channel is different from the starting RB of the first frequency-domain interval, but the bandwidth occupied by the RBs of the frequency-domain resources of the first physical channel is the same as the bandwidth occupied by the RBs of the first frequency-domain interval.

In some embodiments, in a case where one parameter, i.e., the frequency-domain parameter among the starting RB, the number of RBs and the bandwidth occupied by the RBs of the frequency-domain resources of the first physical channel is different from one parameter, i.e., the frequency-domain parameter among the starting RB, the number of RBs and the bandwidth occupied by the RBs of the first frequency-domain interval, the parameter of the first physical channel is determined based on the parameter of the first frequency-domain interval, the first SCS and the second SCS.

In an example, the starting RB of the frequency-domain resources of the first physical channel is different from the starting RB of the first frequency-domain interval, the first SCS is 15 KHz, the second SCS is 30 KHz, and the second parameter is the ratio of the second SCS to the first SCS, then the starting RB of the frequency-domain resources of the first physical channel is the starting RB of the first frequency-domain interval divided by the second parameter.

In an example, the number of RBs of the frequency-domain resources of the first physical channel is different from the number of RBs of the first frequency-domain interval, the first SCS is 15 KHz, the second SCS is 30 KHz, and the second parameter is the ratio of the second SCS to the first SCS, then the number of RBs of the frequency-domain resources of the first physical channel is the number of RBs of the first frequency-domain interval divided by the second parameter.

In a scenario where the frequency-domain resources of the first physical channel are determined based on the second frequency-domain resource indication information, the first SCS and the second SCS, the terminal device or the network device determines the frequency-domain resources of the first physical channel according to the second frequency-domain resource indication information, the first SCS and the second SCS.

It is to be understood that the second frequency-domain resource indication information and the first SCS are used for determining the first frequency-domain interval. Herein, when the frequency-domain resources of the first physical channel are determined, the first frequency-domain interval is not required to be determined, and the frequency-domain resources of the first physical channel are directly determined according to the second frequency-domain resource indication information, the first SCS and the second SCS.

In some embodiments, the frequency-domain resources of the first physical channel are determined based on the second frequency-domain resource indication information and a second parameter, where the second parameter is associated with the first SCS and the second SCS.

The second SCS is the same as or different from the first SCS. In an example, the first SCS is 15 KHz and the second SCS is 15 KHz. In an example, the first SCS is 15 KHz and the second SCS is 30 KHz. In an example, the first SCS is 30 KHz and the second SCS is 15 KHz.

The terminal device or the network device determines the second parameter based on the first SCS and the second SCS. In an example, the second parameter is the ratio of the second SCS to the first SCS. In an example, the second parameter is the ratio of the first SCS to the second SCS.

The terminal device or the network device determines an index of the starting RB and/or the number of RBs and/or the bandwidth occupied by the RBs indicated by the second frequency-domain resource indication information, determines the index of the starting RB of the first physical channel according to the index of the starting RB indicated by the second frequency-domain resource indication information and the second parameter, and/or determines the number of RBs included in the frequency-domain resources of the first physical channel according to the number of RBs indicated by the second frequency-domain resource indication information and the second parameter, and determines the bandwidth occupied by the RBs of the frequency-domain resources of the first physical channel according to bandwidth occupied by the RBs indicated by the second frequency-domain resource indication information and the second parameter.

In some embodiments, the first number of physical channels are used for the repetition of a first Transport Block (TB), where a Transport Block Size (TBS) of the first TB is determined according to following parameters of a fifth physical channel: a number of time-domain resources, a number of frequency-domain resources, and a Modulation and Coding Scheme (MCS).

The size of the first TB sent/received by each physical channel is determined based on the number of time-domain resources, the number of frequency-domain resources, and the MCS of the fifth physical channel among the first number of physical channels. Therefore, the TBs sent/received by different physical channels have the same size, and the TBS of the TBs sent/received by the first number of physical channels, which is determined based on only the parameter of one physical channel, is applicable to each of the first number of physical channels.

In the embodiment of the present disclosure, the size of the TB sent/received by each of the first number of physical channels is not required to be independently determined according to the number of time-domain resources, the number of frequency-domain resources, and the MCS of the physical channel per se, so as to avoid to introduce scheduling restrictions or transmission in a case where TBSs of different physical channels are not exactly the same.

The fifth physical channel is one of the first number of physical channels or does not belong to the first number of physical channels.

**In** some embodiments, the fifth physical channel is one of:
a physical channel in a frequency-domain resource set having a smallest sequence number among a second number of frequency-domain resource sets where the first number of physical channels are located;
a physical channel in a frequency-domain resource set having a largest sequence number among the second number of frequency-domain resource sets;
a physical channel in a frequency-domain resource set having a smallest SCS among the second number of frequency-domain resource sets;
a physical channel in a frequency-domain resource set having a largest SCS among the second number of frequency-domain resource sets;
a physical channel in one frequency-domain resource set configured by the network device among the second number of frequency-domain resource sets;
a physical channel having an earliest starting time among the first number of physical channels; or
a physical channel indicated by the network device.

In some embodiments, an MCS corresponding to the first physical channel is different from an MCS corresponding to the second physical channel.

The physical channels in different frequency-domain resource sets correspond to different MCSs. The MCS used by the physical channel in each frequency-domain resource set may be independently indicated. That is to say, the configuration signaling includes multiple MCS indication information fields, and different MCS indication information fields correspond to different physical channels respectively, to indicate an MCS used by a respective one of the physical channels.

It is to be understood that multiple different physical channels on the same frequency-domain resource set use the same MCS, and the MCS is indicated by the same MCS indication information field.

In some embodiments, Redundancy Version (RV) information of each of the first number of physical channels is configured by fifth configuration information, where the fifth configuration information is determined by a sending device that sends the first number of physical channels.

If the network device sends the first number of physical channels, the terminal device receives the first number of physical channels, and the physical channels are the downlink physical channels, then the network device indicates, through the fifth configuration information, RV information used by each of the first number of physical channels.

In this case, the fifth configuration information may be transmitted through the PDCCH or higher layer signaling, or may be transmitted on a specific resource of the PDSCH mapped by an agreed mapping manner.

If the terminal device sends the first number of physical channels, the network device receives the first number of physical channels, and the physical channels are the uplink physical channels, then the terminal device indicates, through the fifth configuration information, RV information used by each of the first number of physical channels.

In this case, the fifth configuration information may be transmitted on the specific resource of the PUSCH mapped by the agreed mapping manner.

In some embodiments, the RV information of the first physical channel is determined according to an index of the first physical channel.

In this case, the RV information of each of the first number of physical channels is determined according to an index of a respective one of the physical channels.

In an example, for the first one physical channel, i.e., the physical channel 0, the initial RV number is r, then the rv number used by the physical channel n is: (r + n) mod 4, i.e. the remainder of (r + n) divided by 4.

In an example, the RV information in the RV sequence is sequentially allocated to each physical channel in the order of the indexes of the physical channels. Herein, the RV sequence may be {0, 3, 0, 3} or {0, 2, 3, 1}, {0, 0, 0, 0}, etc. For example, if the RV sequence is {0, 3, 0, 3}, then the RV number used by the physical channel 0 is 0, the RV number used by the physical channel 1 is 3, the RV number used by the physical channel 2 is 0, the RV number used by the physical channel 3 is 3, and so on; and thus the RV number used by the physical channel n is the (n mod 4)-th RV number in {0, 3, 0, 3}. For another example, if the RV sequence is {0, 3, 0, 3} and the starting index i is 1, then the RV number used by the physical channel 0 is 3, the RV number used by the physical channel 1 is 0, the RV number used by the physical channel 2 is 3, the RV number used by the physical channel 3 is 0, and so on; and thus the RV number used by the physical channel n is the ((n + i) mod 4)-th RV number in {0, 3, 0, 3}.

In some embodiments, the RV information of the first physical channel is an agreed fixed RV.

In this case, all the physical channels use the same RV information that is the agreed fixed RV.

In some embodiments, the index of the first physical channel is determined according to time-domain positions of the time-domain resources of the first physical channel and frequency-domain positions of the frequency-domain resources of the first physical channel.

In some embodiments, an indexing manner of the first number of physical channels includes one of:
the first number of physical channels are indexed according to an ending position of the time-domain resources firstly and then according to positions of the frequency-domain resources; or
the first number of physical channels are indexed according to the positions of the frequency-domain resources firstly and then according to the ending position of the time-domain resources.

In some embodiments, a second number of frequency-domain resource sets where the first number of physical channels are located satisfy at least one of following four conditions.

For the first condition, the second number of frequency-domain resource sets correspond to a same serving cell.

For the second condition, the second number of frequency-domain resource sets correspond to the same Hybrid Automatic Repeat reQuest (HARQ) entity.

For the third condition, one of the second number of frequency-domain resource sets is used for the terminal device to detect an SSB or receive system information.

For the fourth condition, the second number of frequency-domain resource sets are configured by a network device.

These conditions are non-necessary conditions for the second number of frequency-domain resource sets.

The method for data transmission provided by the embodiment of the present disclosure is further described below.

In the method for data transmission provided by the embodiment of the present disclosure, when multiple component carriers are uniformly managed as one cell, the multiple component carriers may share one HARQ entity. That is to say, a same TB may be sent/received over different carriers. In this case, the repetition of one physical channel may be performed on the frequency domain, thereby significantly reducing the transmission delay while providing the high reliability.

The terminal device receives or sends M (i.e., the first number greater than or equal to N) physical channels on N (i.e., the second number greater than 1) frequency-domain resource sets. The frequency-domain resources occupied by one of the M physical channels belong to one frequency-domain resource set, and the M physical channels are used for the repetition, i.e., the transmission of the same information or the same TB. The frequency-domain resource set may be understood as one of the following: a carrier, a BWP, at least one subcarrier, or at least one RB. The physical channel may be an uplink channel or a downlink channel. For example, the physical channel is the PDSCH or the PUSCH.

The non-necessary condition for the terminal device to receive or send M physical channels on N frequency-domain resource sets includes at least one of the following:
the N frequency-domain resource sets correspond to a same serving cell;
the terminal detects the SSB or receives the system information in one of the N frequency-domain resource sets, and does not detect the SSB or receives the system information in other frequency-domain sets;
the N frequency-domain resource sets correspond to one HARQ entity; or
the N frequency-domain resource sets are configured by a base station.

The time-domain resources, frequency-domain resources, TBS, MCS, and RV of the physical channel are described below, respectively.

### Time-domain resources

The manner of configuring the time-domain resources of the physical channel includes the following two manners.

In a first manner of configuring the time-domain resources, the terminal device receives first configuration information, and the first configuration information indicates time-domain resources occupied by at least one of the M physical channels.

The first configuration information may include multiple pieces of information. Different pieces of information indicate time-domain resources occupied by different physical channels.

The first configuration information directly indicates the (positions and/or the number of) time-domain symbols occupied by the M physical channels. For example, the first configuration information includes multiple pieces of TDRA information, and one TDRA indicates time-domain symbols occupied by one physical channel; or, one piece of TDRA information includes multiple pieces of Start and Length Indicator Value (SLIV) information, and one piece of SLIV information indicates time-domain symbols occupied by one physical channel.

The first configuration information may be Downlink Control Information (DCI) or higher layer signaling.

In the first manner of configuring the time-domain resources, the time-domain resources are independently configured, the configuration efficiency is highest, but the signaling overhead is large. In this case, M physical channels may be sent/received through different symbols or slots in the time domain.

In a second manner of configuring the time-domain resources, the second configuration information determines a first time-domain resource or a time-domain resource area, and determines time-domain symbols occupied by one of the M physical channels according to the time-domain resource area.

In the second manner of configuring the time-domain resources, the time-domain resources of multiple physical channels are obtained according to one piece of configuration information, i.e., the second configuration information, and the signaling overhead is small, but the flexibility of the second manner of configuring the time-domain resources is worse than the first manner of configuring the time-domain resources.

In an implementation, the second manner of configuring the time-domain resources includes the following operations S1 to S4.

In operation S1, a first time-domain resource is determined according to the second configuration information and the reference SCS.

A slot where the first time-domain resource is located and symbols occupied by the first time-domain resource within the slot may be determined.

The reference SCS is configured by the base station or is the same as the SCS used by one of the N frequency-domain resource sets (such as the frequency-domain resource set having the smallest, or largest sequence number or one resource set configured by the base station, or a resource set for transmission of the second configuration information, or the resource set having the largest SCS or the smallest SCS among the N frequency-domain resource sets).

In operation S2, a second time-domain resource of each frequency-domain resource set in the time domain is determined according to the first time-domain resource.

In operation S3, for one second time-domain resource, an available time-domain resource is determined in the second time-domain resource.

The available time-domain resource is a remaining resource after excluding the unavailable resource from the corresponding second time-domain resource. The unavailable resource includes at least one of: a symbol with a conflicting transmission direction (the uplink symbol or flexible symbol are the unavailable symbols for the downlink physical channel; the downlink symbol or flexible symbol are the unavailable symbols for the uplink physical channel), a symbol occupied by an SSB, an unavailable symbol configured by a base station, a symbol occupied by a reference signal such as the CSI-RS and SRS, or a symbol occupied by the CORESET, etc.

In operation S4, if the second time-domain resource includes symbols in multiple slots, it is determined that the time-domain symbols occupied by one physical channel are the symbols of the second time-domain resource in one slot.

If the number of symbols in one slot that belong to the (available time-domain resource in) second time-domain resource is less than the first threshold, the physical channel is not sent/received by using the symbols in the corresponding slot.

It is to be understood that operation S3 is not an operation that must be performed, i.e., an optional operation. If operation S3 is not performed, then in operation S4, when the second time-domain resource includes symbols in multiple slots, it is determined that the time-domain symbols occupied by one physical channel are the symbols of the second time-domain resource in one slot. If operation S3 is performed, then in operation S4, when the available time-domain resource of the second time-domain resource includes symbols in multiple slots, it is determined that the time-domain symbols occupied by one physical channel are symbols in the available time-domain resource of the second time-domain resource in one slot.

In an example, as illustrated in FIG. 9, the reference SCS is 15 kHz, and it is determined, according to the second configuration information, that the time-domain resource area is symbols 3 to 12 in the slot with the SCS of 15 kHz. It is determined that the time-domain resources (i.e., the second time-domain resources) for sending/receiving the physical channel within the carriers 1, 2, and 3 are an (complete) area overlapping with the time-domain resource area. The available time-domain resources for sending/receiving the physical channel within the carriers 1, 2, and 3 are determined. The resources denoted as red are the unavailable resources. It is determined that the available resources in the second time-domain resource of carrier 2 include symbols located in two slots, and one physical channel is unable to be sent/received across slots, i.e., one physical channel may only occupy symbols in one slot, then multiple physical channels may be sent/received in carrier 2. If it is restricted that the physical channel must occupy continuous time-domain resources, the first one slot (the shadow area of the first slot in the second time-domain resource of the carrier 2 is the unavailable resource) of the two slots included in the second time-domain resource of the carrier 2 includes two physical channels: a physical channel 1 and a physical channel 2. If it is not restricted that the physical channel must occupy continuous time-domain resources, the discontinuous resources in the first one slot of the two slots included in the second time-domain resource of the carrier 2 may be used together for sending/receiving one physical channel (i.e., the physical channel 1 and the physical channel 2 are combined into one physical channel). The carrier 3 has the similar determination manner. Herein, if the number of available symbols in each of the first one slot and the fourth one slot in the second time-domain resource of the carrier 3 is less than the first threshold, the symbols in each of the first one slot and the fourth one slot are not used for sending/receiving the physical channel.

**It** is to be understood that in the second manner of configuring the time-domain resources, the characteristics of the time-domain resource area, i.e., the first time-domain resource, may not be presented, the time-domain symbols occupied by the physical channel may be determined according to the second configuration, the reference subcarrier, and the subcarrier of the frequency-domain resource set where one physical channel is located, or the time-domain symbols occupied by each of the physical channels sent/received on the frequency-domain resource set may be determined according to the second configuration information, the reference subcarrier, and the subcarrier of the frequency-domain resource set.

### Frequency-domain resources of the physical channel

The manner of configuring the frequency-domain resources of the physical channel includes the first manner of configuring the frequency-domain resources and the second manner of configuring the frequency-domain resources.

In a first manner of configuring the frequency-domain resources, since the component carriers have different bandwidths, the frequency-domain resources occupied by the physical channels are independently configured for N frequency-domain resource sets.

In the first manner of configuring the frequency-domain resources, the frequency-domain resources of different frequency-domain resource sets are independently configured, the configuration efficiency is highest, but the signaling overhead is large.

In a second manner of configuring the frequency-domain resources, the physical channel is sent/received by using the same frequency-domain resources in different frequency-domain resource sets. It is to be understood that the same frequency-domain resources do not have the same absolute frequency, but have the same frequency-domain resource unit parameter(s). For example, the same frequency-domain resources are the same in terms of at least one of: the sequence number of the starting RB (i.e., the position of the starting RB relative to the starting point of the frequency-domain resource set), the number of RBs, or the bandwidth occupied by the RBs.

In an example, it is obtained, according to the configuration information, that the starting RB is RB n, and the number of RBs is X. Then, RB n to RB n+X-1 are used within each frequency-domain resource set.

In an example, if the starting RB is RB n, the number of RBs is X, and the reference SCS is 15 kHz according to the configuration information, then in the carrier with SCS of 30 kHz, the used frequency-domain resources are RB n to RB (n+X-1)/2, or RB n to RB n+X/2-1, or RB n/2 to RB (n+X-1)/2.

In the embodiment of the present disclosure, different physical channels among the M physical channels sent/received in the same frequency-domain resource set occupy the same the frequency-domain resources, and occupy different time-domain resources.

### TBS of a TB sent/received by the physical channel

The terminal device determines the TBS according to the number of time-domain resources, the number of frequency-domain resources, and the MCS information that correspond to one of the N frequency-domain resource sets. That is to say, one TBS is determined according to the parameters of one frequency-domain resource set, and the TBS is applicable to all physical channels performing the repetition. The frequency-domain resource set used for determining the TBS is configured by the base station, or is a frequency-domain resource set using the smallest or largest SCS or a frequency-domain resource set having the smallest or largest sequence number.

### MCS corresponding to the physical channel

The MCSs used by the physical channels sent/received in N frequency-domain resource sets are independently indicated. That is to say, the configuration signaling includes multiple MCS indication information fields, and the multiple MCS indication information fields correspond to different physical channels. Different physical channels among the M physical channels sent/received in the same frequency-domain resource set use the same MCS.

### RV of the physical channel

The determination of the RV information of the physical channel includes two manners.

In a first manner, the RV information is indicated by a sending end.

The sending end may flexibly configure the used RV information according to the actual code rate of the physical channel.

For the PDSCH, the base station indicates RV information used by each physical channel. The RV information may be transmitted through the PDCCH or higher layer signaling, or may be transmitted on a specific resource of the PDSCH mapped by an agreed manner.

For the PUSCH, the UE indicates RV information used by each physical channel. The RV information may be transmitted on a specific resource of the PUSCH mapped by an agreed manner.

In a second manner, the RV information used by each physical channel is determined according to the order of the indexes of the physical channels.

The M physical channels are indexed in an agreed manner.

In an example, the agreed manner includes: numbering according to a carrier number firstly and then according to a time-domain ending position, as illustrated in FIG. 10; or numbering according to the time-domain ending position firstly and then according to the carrier number, as illustrated in FIG. 11.

The RV information used by each physical channel being determined according to the order of the indexes of the physical channels includes, but is not limited to, the following examples.

In a first example, the base station indicates an initial RV number r for the physical channel 0, then the rv number used by the physical channel n is (r+n) mod 4.

In a second example, the RV number used by each physical channel is determined in the order of {0, 3, 0, 3} or {0, 2, 3, 1}.

In a third example, the RV number is fixed, and all channels use the same RV version.

In a fourth example, the RV number used by each physical channel is determined according to the order of {0, 3, 0, 3}, {0, 2, 3, 1} or {0, 0, 0, 0}. That is to say, the rv number used by the physical channel n is the RV number with an index of (n mod 4) (the index starts from 0) in the sequence, or the RV number with the index of ((i+n) mod 4) in the sequence, where i is a given starting index.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary duplication. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It is to be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent the transmission direction of the signal or data sent in a first direction from a station to a user device in a cell; the term "uplink" is used to represent the transmission direction of the signal or data sent in a second direction from the user device in the cell to the station; and the term "sidelink" is used to represent the transmission direction of the signal or data sent in a third direction from a user device 1 to a user device 2. For example, a "downlink signal" means that the signal is sent in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

FIG. 12 is a schematic structural diagram of a terminal device according to an embodiment of the present disclosure. As illustrated in FIG. 12, the terminal device 1200 includes a first communicating unit 1201.

The first communicating unit 1201 is configured to send or receive a first number of physical channels, where the first number of physical channels include a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

It is to be understood that the terminal device 1200 may further include a processing unit configured to generate the first number of first physical channels based on the first information or parse the first information sent/received by the first number of first physical channels.

In some embodiments, the first number of physical channels include a third physical channel and a fourth physical channel, frequency-domain resources of the third physical channel and frequency-domain resources of the fourth physical channel belong to a same frequency-domain resource set, and time-domain resources of the third physical channel are different from time-domain resources of the fourth physical channel.

In some embodiments, a manner of determining the time-domain resources of the first physical channel includes one of:
determining based on one of at least two pieces of first time-domain resource indication information included in first configuration information; and
determining based on one piece of second time-domain resource indication information included in second configuration information.

In some embodiments, a number of pieces of first time-domain resource indication information included in the first configuration information is less than or equal to the first number.

In some implementations, where
one piece of the first time-domain resource indication information is used for indicating time-domain resources of one physical channel; or
one piece of the first time-domain resource indication information is used for determining time-domain resources of one or more physical channels sent/received in one frequency-domain resource set.

In some embodiments, the time-domain resources of the first physical channel are determined based on the second time-domain resource indication information and a first SubCarrier Spacing (SCS).

In some embodiments, the determination according to the second time-domain resource indication information and the first SCS includes:
the time-domain resources of the first physical channel belong to a first time-domain interval, and the first time-domain interval is determined based on the second time-domain resource indication information and the first SCS; or
the time-domain resources of the first physical channel is determined based on the second time-domain resource indication information, the first SCS, and a second SCS, where the second SCS is an SCS corresponding to the first physical channel or an SCS corresponding to a first frequency-domain resource set where the first physical channel is located.

In some embodiments, if the time-domain resources of the first physical channel belong to the first time-domain interval:
the time-domain resources of the first physical channel are time-domain resources within the first time-domain interval; or
the time-domain resources of the first physical channel are available time-domain resources within the first time-domain interval; or
the time-domain resources of the first physical channel are time-domain resources belonging to one time-domain unit within the first time-domain interval; or
the time-domain resources of the first physical channel are available time-domain resources belonging to one time-domain unit within the first time-domain interval.

In some embodiments, the available time-domain resources within the first time-domain interval are time-domain resources other than unavailable time-domain resources within the first time-domain interval, and the unavailable time-domain resources include at least one of:
a symbol with a conflicting transmission direction;
a symbol occupied by a Synchronizing Signal Block (SSB);
an unavailable symbol configured by a network device;
a symbol occupied by a reference signal; or
a symbol occupied by a Control-Resource Set (CORESET).

In some embodiments, if a number of symbols included in the time-domain resources belonging to one time-domain unit within the first time-domain interval or included in the available time-domain resources belonging to one time-domain unit within the first time-domain interval is less than a third number, the time-domain resources belonging to one time-domain unit within the first time-domain interval or the available time-domain resources belonging to one time-domain unit within the first time-domain interval are not used for receiving or sending the first physical channel.

In some embodiments, the time-domain resources of the first physical channel are determined based on the second time-domain resource indication information and a first parameter, where the first parameter is associated with the first SCS and the second SCS.

In some embodiments, a manner of determining the frequency-domain resources of the first physical channel includes one of following two manners.
determining based on one of at least two pieces of first frequency-domain resource indication information included in third configuration information; or
determining based on one piece of second frequency-domain resource indication information included in fourth configuration information.

**In** some embodiments, a number of pieces of first frequency-domain resource indication information included in the third configuration information is less than or equal to the first number.

**In** some embodiments, one piece of the first frequency-domain resource indication information is used for determining frequency-domain resources of one or more physical channels sent/received in one frequency-domain resource set.

**In** some embodiments, the time-domain resources of the first physical channel are determined based on the second frequency-domain resource indication information and the first SCS.

**In** some embodiments, the first SCS is configured by the network device, agreed in a protocol, or determined according to an agreed first rule.

In some embodiments, the first rule includes one of:
a smallest SCS or largest SCS among at least two SCSs corresponding to the first number of physical channels; or
a smallest SCS or largest SCS among at least two SCSs corresponding to a second number of frequency-domain resource sets where the first number of physical channels are located; or
an SCS corresponding to a frequency-domain resource set having a largest or smallest sequence number among the second number of frequency-domain resource sets where the first number of physical channels are located.

In some embodiments, the frequency-domain resources of the first physical channel are determined based on a first frequency-domain interval, where the first frequency-domain interval is determined based on the second frequency-domain resource indication information and the first SCS; or

the frequency-domain resources of the first physical channel are determined based on the second frequency-domain resource indication information, the first SCS and a second SCS, where the second SCS is an SCS corresponding to the first physical channel or an SCS corresponding to a first frequency-domain resource set where the first physical channel is located.

In some embodiments, at least one of following is the same for the frequency-domain resources of the first physical channel and the first frequency-domain interval: a starting Resource Block (RB), a number of RBs, or a bandwidth occupied by the RBs.

In some embodiments, the frequency-domain resources of the first physical channel are determined based on the second frequency-domain resource indication information and a second parameter, where the second parameter is associated with the first SCS and the second SCS.

In some embodiments, the first number of physical channels are used for repetition of a first Transport Block (TB), where a Transport Block Size (TBS) of the first TB is determined according to following parameters of a fifth physical channel: a number of time-domain resources, a number of frequency-domain resources, and a Modulation and Coding Scheme (MCS).

In some embodiments, the fifth physical channel is one of:
a physical channel in a frequency-domain resource set having a smallest sequence number among a second number of frequency-domain resource sets where the first number of physical channels are located;
a physical channel in a frequency-domain resource set having a largest sequence number among the second number of frequency-domain resource sets;
a physical channel in a frequency-domain resource set having a smallest SCS among the second number of frequency-domain resource sets;
a physical channel in a frequency-domain resource set having a largest SCS among the second number of frequency-domain resource sets;
a physical channel in one frequency-domain resource set configured by the network device among the second number of frequency-domain resource sets;
a physical channel having an earliest starting time among the first number of physical channels; or
a physical channel indicated by the network device.

In some embodiments, an MCS corresponding to the first physical channel is different from an MCS corresponding to the second physical channel.

In some embodiments, Redundancy Version (RV) information of each of the first number of physical channels is configured by fifth configuration information, where the fifth configuration information is determined by a sending device that sends the first number of physical channels.

In some embodiments, RV information of the first physical channel is determined according to an index of the first physical channel.

In some embodiments, the index of the first physical channel is determined according to time-domain positions of the time-domain resources of the first physical channel and frequency-domain positions of the frequency-domain resources of the first physical channel.

In some embodiments, an indexing manner of the first number of physical channels includes one of:
indexing according to an ending position of the time-domain resources firstly and then according to the positions of the frequency-domain resources; or
indexing according to the positions of the frequency-domain resources firstly and then according to the ending position of the time-domain resources.

In some embodiments, a second number of frequency-domain resource sets where the first number of physical channels are located satisfy at least one of following four conditions.

The second number of frequency-domain resource sets correspond to a same serving cell;

The second number of frequency-domain resource sets correspond to a same Hybrid Automatic Repeat reQuest (HARQ) entity;

One of the second number of frequency-domain resource sets is used for the terminal device to detect an SSB or receive system information; or

The second number of frequency-domain resource sets are configured by a network device.

FIG. 13 is a schematic structural diagram of a network device according to an embodiment of the present disclosure. As illustrated in FIG. 13, the network device 1300 includes a second communicating unit 1301.

The second communicating unit 1301 is configured to send or receive a first number of physical channels, where the first number of physical channels include a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

It is to be understood that the network device 1300 may further include a processing unit configured to generate the first number of first physical channels based on the first information or parse the first information sent/received by the first number of first physical channels.

In some embodiments, the first number of physical channels include a third physical channel and a fourth physical channel, frequency-domain resources of the third physical channel and frequency-domain resources of the fourth physical channel belong to a same frequency-domain resource set, and time-domain resources of the third physical channel are different from time-domain resources of the fourth physical channel.

In some embodiments, a manner of determining the time-domain resources of the first physical channel includes one of:
determining based on one of at least two pieces of first time-domain resource indication information included in first configuration information; and
determining based on one piece of second time-domain resource indication information included in second configuration information.

In some embodiments, a number of pieces of first time-domain resource indication information included in the first configuration information is less than or equal to the first number.

In some implementations, where
one piece of the first time-domain resource indication information is used for indicating time-domain resources of one physical channel; or
one piece of the first time-domain resource indication information is used for determining time-domain resources of one or more physical channels sent/received in one frequency-domain resource set.

In some embodiments, the time-domain resources of the first physical channel are determined based on the second time-domain resource indication information and a first SubCarrier Spacing (SCS).

In some embodiments, the time-domain resources of the first physical channel belong to a first time-domain interval, and the first time-domain interval is determined according to the second time-domain resource indication information and the first SCS; or
the time-domain resources of the first physical channel is determined based on the second time-domain resource indication information, the first SCS, and a second SCS, where the second SCS is an SCS corresponding to the first physical channel or an SCS corresponding to a first frequency-domain resource set where the first physical channel is located.

In some embodiments, if the time-domain resources of the first physical channel belong to the first time-domain interval:
the time-domain resources of the first physical channel are time-domain resources within the first time-domain interval; or
the time-domain resources of the first physical channel are available time-domain resources within the first time-domain interval; or
the time-domain resources of the first physical channel are time-domain resources belonging to one time-domain unit within the first time-domain interval; or
the time-domain resources of the first physical channel are available time-domain resources belonging to one time-domain unit within the first time-domain interval.

In some embodiments, the available time-domain resources within the first time-domain interval are time-domain resources other than unavailable time-domain resources within the first time-domain interval, and the unavailable time-domain resources include at least one of:
a symbol with a conflicting transmission direction;
a symbol occupied by a Synchronizing Signal Block (SSB);
an unavailable symbol configured by a network device;
a symbol occupied by a reference signal; or
a symbol occupied by a Control-Resource Set (CORESET).

In some embodiments, if a number of symbols included in the time-domain resources belonging to one time-domain unit within the first time-domain interval or included in the available time-domain resources belonging to one time-domain unit within the first time-domain interval is less than a third number, the time-domain resources belonging to one time-domain unit within the first time-domain interval or the available time-domain resources belonging to one time-domain unit within the first time-domain interval are not used for receiving or sending the first physical channel.

In some embodiments, the time-domain resources of the first physical channel are determined based on the second time-domain resource indication information and a first parameter, where the first parameter is associated with the first SCS and the second SCS.

In some embodiments, a manner of determining the frequency-domain resources of the first physical channel includes one of following two manners.
determining based on one of at least two pieces of first frequency-domain resource indication information included in third configuration information; or
determining based on one piece of second frequency-domain resource indication information included in fourth configuration information.

In some embodiments, a number of pieces of first frequency-domain resource indication information included in the third configuration information is less than or equal to the first number.

In some embodiments, one piece of the first frequency-domain resource indication information is used for determining frequency-domain resources of one or more physical channels sent/received in one frequency-domain resource set.

In some embodiments, the frequency-domain resources of the first physical channel are determined based on the second frequency-domain resource indication information and the first SCS.

In some embodiments, the first SCS is configured by the network device, agreed in a protocol, or determined according to an agreed first rule.

In some embodiments, the first rule includes one of:
a smallest SCS or largest SCS among at least two SCSs corresponding to the first number of physical channels; or
a smallest SCS or largest SCS among at least two SCSs corresponding to a second number of frequency-domain resource sets where the first number of physical channels are located; or
an SCS corresponding to a frequency-domain resource set having a largest or smallest sequence number among the second number of frequency-domain resource sets where the first number of physical channels are located.

In some embodiments, the frequency-domain resources of the first physical channel are determined based on a first frequency-domain interval, where the first frequency-domain interval is determined based on the second frequency-domain resource indication information and the first SCS; or
the frequency-domain resources of the first physical channel are determined based on the second frequency-domain resource indication information, the first SCS and a second SCS, where the second SCS is an SCS corresponding to the first physical channel or an SCS corresponding to a first frequency-domain resource set where the first physical channel is located.

In some embodiments, at least one of following is the same for the frequency-domain resources of the first physical channel and the first frequency-domain interval: a starting Resource Block (RB), a number of RBs, or a bandwidth occupied by the RBs.

In some embodiments, the frequency-domain resources of the first physical channel are determined based on the second frequency-domain resource indication information and a second parameter, where the second parameter is associated with the first SCS and the second SCS.

In some embodiments, the first number of physical channels are used for repetition of a first Transport Block (TB), where a Transport Block Size (TBS) of the first TB is determined according to following parameters of a fifth physical channel: a number of time-domain resources, a number of frequency-domain resources, and a Modulation and Coding Scheme (MCS).

In some embodiments, the fifth physical channel is one of:
a physical channel in a frequency-domain resource set having a smallest sequence number among a second number of frequency-domain resource sets where the first number of physical channels are located;
a physical channel in a frequency-domain resource set having a largest sequence number among the second number of frequency-domain resource sets;
a physical channel in a frequency-domain resource set having a smallest SCS among the second number of frequency-domain resource sets;
a physical channel in a frequency-domain resource set having a largest SCS among the second number of frequency-domain resource sets;
a physical channel in one frequency-domain resource set configured by the network device among the second number of frequency-domain resource sets;
a physical channel having an earliest starting time among the first number of physical channels; or
a physical channel indicated by the network device.

In some embodiments, an MCS corresponding to the first physical channel is different from an MCS corresponding to the second physical channel.

In some embodiments, Redundancy Version (RV) information of each of the first number of physical channels is configured by fifth configuration information, where the fifth configuration information is determined by a sending device that sends the first number of physical channels.

In some embodiments, RV information of the first physical channel is determined according to an index of the first physical channel.

In some embodiments, the index of the first physical channel is determined according to time-domain positions of the time-domain resources of the first physical channel and frequency-domain positions of the frequency-domain resources of the first physical channel.

In some embodiments, an indexing manner of the first number of physical channels includes one of:
indexing according to an ending position of the time-domain resources firstly and then according to the positions of the frequency-domain resources; or
indexing according to the positions of the frequency-domain resources firstly and then according to the ending position of the time-domain resources.

In some embodiments, a second number of frequency-domain resource sets where the first number of physical channels are located satisfy at least one of following four conditions.
The second number of frequency-domain resource sets correspond to a same serving cell;
The second number of frequency-domain resource sets correspond to a same Hybrid Automatic Repeat reQuest (HARQ) entity;
One of the second number of frequency-domain resource sets is used for the terminal device to detect an SSB or receive system information; or
The second number of frequency-domain resource sets are configured by a network device.

Those skilled in the art will appreciate that the related descriptions of the terminal device and network device in the embodiments of the present disclosure may be understood with reference to the descriptions of the method for data transmission in the aforementioned embodiments of the present disclosure.

FIG. 14 is a schematic structural diagram of a communication device 1400 according to an embodiment of the present disclosure. The communication device may be a terminal device or a network device. The communication device 1400 illustrated in FIG. 14 includes a processor 1410. The processor 1410 may be configured to invoke and execute computer programs stored in a memory to perform each of the methods according to the embodiments of the present disclosure.

Optionally, as illustrated in FIG. 14, the communication device 1400 may further include a memory 1420. Herein, the processor 1410 may be configured to invoke and execute the computer programs stored in the memory 1420 to perform each of the methods according to the embodiments of the present disclosure.

Herein, the memory 1420 may be a separate device independent of the processor 1410, or may be integrated into the processor 1410.

Optionally, as illustrated in FIG. 14, the communication device 1400 may further include a transceiver 1430. The processor 1410 may control the transceiver 1430 to communicate with other devices. Specifically, the transceiver 1430 may transmit information or data to other devices, or receive information or data from other devices.

Herein, the transceiver 1430 may include a transmitter and a receiver. The transceiver 1430 may further include one or more antennas.

Optionally, the communication device 1400 may specifically be the network device in the embodiments of the present disclosure. The communication device 1400 may implement corresponding processes that are implemented by the network device in each of the methods in the embodiments of the present disclosure. For brevity, details are not elaborated herein again.

Optionally, the communication device 1400 may specifically be the mobile terminal/terminal device in the embodiments of the present disclosure. The communication device 1400 may implement corresponding processes that are implemented by the mobile terminal/terminal device in each of the methods in the embodiments of the present disclosure. For brevity, details are not elaborated herein again.

FIG. 15 is a schematic structural diagram of a chip according to an embodiment of the present disclosure. The chip 1500 illustrated in FIG. 15 includes a processor 1510. The processor 1510 may be configured to invoke and execute computer programs stored in a memory to perform each of the methods according to the embodiments of the present disclosure.

Optionally, as illustrated in FIG. 15, the chip 1500 may further include a memory 1520. Herein, the processor 1510 may be configured to invoke and execute the computer programs stored in the memory 1520 to perform each of the methods according to the embodiments of the present disclosure.

Herein, the memory 1520 may be a separate device independent of the processor 1510, or may be integrated into the processor 1510.

Optionally, the chip 1500 may further include an input interface 1530. Herein, the processor 1510 may control the input interface 1530 to communicate with other devices or chips. Specifically, the input interface 1530 may obtain information or data from other devices or chips.

Optionally, the chip 1500 may further include an output interface 1540. Herein, the processor 1510 may control the output interface 1540 to communicate with other devices or chips. Specifically, the output interface 1540 may output information or data to other devices or chips.

Optionally, the chip may be applied to the network device in the embodiments of the present disclosure. The chip may implement the corresponding processes implemented by the network device in each of the methods in the embodiments of the present disclosure. For brevity, details are not elaborated herein again.

Optionally, the chip may be applied to the mobile terminal/terminal device in the embodiments of the present disclosure. The chip may implement the corresponding processes implemented by the mobile terminal/terminal device in each of the methods in the embodiments of the present disclosure. For brevity, details are not elaborated herein again.

It is to be understood that, the chip referred to in the embodiments of the present disclosure may also be referred to as a system-level chip, a system chip, a chip system, or a system-on-chip, etc.

FIG. 16 is a schematic block diagram of a communication system 1600 according to an embodiment of the present disclosure. As illustrated in FIG. 16, the communication system 1600 includes a terminal device 1610 and a network device 1620.

Herein, the terminal device 1610 may be configured to implement the corresponding functions implemented by the terminal device in the foregoing methods. The network device 1620 may be configured to implement the corresponding functions implemented by the network device in the foregoing methods. For brevity, details are not elaborated herein again.

It is to be understood that the processor in the embodiments of the present disclosure may be an integrated circuit chip having a signal processing capability. During an implementation process, various operations in the aforementioned method embodiments may be implemented by using an integrated logic circuit in a hardware form in the processor or implemented by using instructions in a software form. The foregoing processor may be a general-purpose processor, a Digital Signal Processor (DSP), an Application-Specific Integrated Circuit (ASIC), a Field Programmable Gate Array (FPGA), or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the method disclosed in the embodiments of the present disclosure may be directly embodied to be executed and completed by a hardware decoding processor, or by a combination of hardware and software modules in the decoding processor. The software module may be located in a mature storage medium in the field, such as a Random Access Memory (RAM), a flash memory, a Read-Only Memory (ROM), a Programmable ROM (PROM), an electrically-erasable programmable memory, a register a register, or the like. The storage medium is located in the memory, and the processor reads information in the memory to complete the operations of the foregoing methods in combination with hardware of the processor.

It can be understood that the memory in the embodiments of the present disclosure may be a volatile memory or a non-volatile memory, or may include both the volatile memory and the non-volatile memory. The non-volatile memory may be an ROM, a PROM, an Erasable PROM (EPROM), an Electrically EPROM (EEPROM) or a flash memory. The volatile memory may be an RAM and is used as an external high-speed cache. It is exemplarily but unlimitedly described that RAMs in various forms may be adopted, such as a Static RAM (SRAM), a Dynamic RAM (DRAM), a Synchronous DDRAM (SDRAM), a double data rate SDRAM (DDR SDRAM), an Enhanced SDRAM (ESDRAM), a Synchlink DRAM (SLDRAM) and a Direct Rambus RAM (DR RAM). It is to be noted that the memory of the system and methods described herein is intended to include, but not be limited to, memories of these and any other suitable types.

It is to be understood that the aforementioned memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. That is to say, the memory in the embodiments of the present disclosure is intended to include, but not be limited to, memories of these and any other suitable types.

An embodiment of the present disclosure further provides a computer-readable storage medium configured to store computer programs.

Optionally, the computer-readable storage medium may be applied to the network device in the embodiments of the present disclosure, and the computer programs cause a computer to perform the corresponding processes performed by the network device in various methods of the embodiments of the present disclosure. For brevity, details are not elaborated herein again.

Optionally, the computer-readable storage medium may be applied to the mobile terminal/terminal device in the embodiments of the present disclosure, and the computer program causes a computer to perform the corresponding processes performed by the mobile terminal/terminal device in various methods of the embodiments of the present disclosure. For brevity, details are not described herein again.

An embodiment of the present disclosure further provides a computer program product, which includes computer program instructions.

Optionally, the computer program product may be applied to the network device in the embodiments of the present disclosure, and the computer program instructions cause a computer to perform the corresponding processes performed by the network device in various methods of the embodiments of the present disclosure. For brevity, details are not elaborated herein again.

Optionally, the computer program product may be applied to the mobile terminal/terminal device in the embodiments of the present disclosure, and the computer program instructions cause a computer to perform the corresponding processes performed by the mobile terminal/terminal device in various methods of the embodiments of the present disclosure. For brevity, details are not described herein again.

An embodiment of the present disclosure further provides a computer program.

Optionally, the computer program may be applied to the network device in the embodiments of the present disclosure, and the computer program, when is run on a computer, causes the computer to perform the corresponding processes performed by the network device in various methods of the embodiments of the present disclosure. For brevity, details are not elaborated herein again.

Optionally, the computer program may be applied to the mobile terminal/terminal device in the embodiments of the present disclosure, and the computer program, when is run on a computer, causes the computer to perform the corresponding processes performed by the mobile terminal/terminal device in various methods of the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned systems, apparatuses and units, reference may be made to the corresponding processes in the aforementioned method embodiments, and such specific working processes of the systems, devices and units are not described herein again for the purpose of convenient and brief description

In some embodiments provided in the present disclosure, it is to be understood that the disclosed systems, apparatuses and methods may be implemented in other manners. For example, the aforementioned apparatus embodiments are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the solutions of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical solutions of the present disclosure or a part of the technical solutions that contributes to the related art or a part of the technical solutions can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claim.

## Claims

1. A method for data transmission, comprising:
sending or receiving, by a terminal device, a first number of physical channels, wherein the first number of physical channels comprise a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

2. The method of claim 1, wherein the first number of physical channels comprise a third physical channel and a fourth physical channel, frequency-domain resources of the third physical channel and frequency-domain resources of the fourth physical channel belong to a same frequency-domain resource set, and time-domain resources of the third physical channel are different from time-domain resources of the fourth physical channel.

3. The method of claim 1 or 2, wherein a manner of determining the time-domain resources of the first physical channel comprises one of:
determining based on one of at least two pieces of first time-domain resource indication information comprised in first configuration information; and
determining based on one piece of second time-domain resource indication information comprised in second configuration information.

4. The method of claim 3, wherein a number of pieces of first time-domain resource indication information comprised in the first configuration information is less than or equal to the first number.

5. The method of claim 3 or 4, wherein
one piece of the first time-domain resource indication information is used for indicating time-domain resources of one physical channel; or
one piece of the first time-domain resource indication information is used for determining time-domain resources of one or more physical channels sent/received in one frequency-domain resource set.

6. The method of claim 3, wherein the time-domain resources of the first physical channel is determined based on the second time-domain resource indication information and a first SubCarrier Spacing, SCS.

7. The method of claim 6, wherein
the time-domain resources of the first physical channel belong to a first time-domain interval, and the first time-domain interval is determined based on the second time-domain resource indication information and the first SCS; or
the time-domain resources of the first physical channel is determined based on the second time-domain resource indication information, the first SCS, and a second SCS, the second SCS being an SCS corresponding to the first physical channel or an SCS corresponding to a first frequency-domain resource set where the first physical channel is located.

8. The method of claim 7, wherein if the time-domain resources of the first physical channel belong to the first time-domain interval:
the time-domain resources of the first physical channel are time-domain resources within the first time-domain interval; or
the time-domain resources of the first physical channel are available time-domain resources within the first time-domain interval; or
the time-domain resources of the first physical channel are time-domain resources belonging to one time-domain unit within the first time-domain interval; or
the time-domain resources of the first physical channel are available time-domain resources belonging to one time-domain unit within the first time-domain interval.

9. The method of claim 8, wherein the available time-domain resources within the first time-domain interval are time-domain resources other than unavailable time-domain resources within the first time-domain interval, and the unavailable time-domain resources comprise at least one of:
a symbol with a conflicting transmission direction;
a symbol occupied by a Synchronizing Signal Block, SSB;
an unavailable symbol configured by a network device;
a symbol occupied by a reference signal; or
a symbol occupied by a Control-Resource Set, CORESET.

10. The method of claim 8 or 9, wherein if a number of symbols comprised in the time-domain resources belonging to one time-domain unit within the first time-domain interval or comprised in the available time-domain resources belonging to one time-domain unit within the first time-domain interval is less than a third number, the time-domain resources belonging to one time-domain unit within the first time-domain interval or the available time-domain resources belonging to one time-domain unit within the first time-domain interval are not used for receiving or sending the first physical channel.

11. The method of claim 7, wherein
the time-domain resources of the first physical channel are determined based on the second time-domain resource indication information and a first parameter, the first parameter being associated with the first SCS and the second SCS.

12. The method of any one of claims 1 to 11, wherein a manner of determining the frequency-domain resources of the first physical channel comprises one of:
determining based on one of at least two pieces of first frequency-domain resource indication information comprised in third configuration information; or
determining based on one piece of second frequency-domain resource indication information comprised in fourth configuration information.

13. The method of claim 12, wherein a number of pieces of first frequency-domain resource indication information comprised in the third configuration information is less than or equal to the first number.

14. The method of claim 12 or 13, wherein
one piece of the first frequency-domain resource indication information is used for determining frequency-domain resources of one or more physical channels sent/received in one frequency-domain resource set.

15. The method of claim 12, wherein the frequency-domain resources of the first physical channel are determined based on the second frequency-domain resource indication information and a first SCS.

16. The method of any one of claims 6 to 11 and 15, wherein the first SCS is configured by a network device, agreed in a protocol, or determined according to an agreed first rule.

17. The method of claim 16, wherein the first rule comprises:
a smallest SCS or largest SCS among at least two SCSs corresponding to the first number of physical channels; or
a smallest SCS or largest SCS among at least two SCSs corresponding to a second number of frequency-domain resource sets where the first number of physical channels are located; or
an SCS corresponding to a frequency-domain resource set having a largest or smallest sequence number among the second number of frequency-domain resource sets where the first number of physical channels are located.

18. The method of claim 15, wherein
the frequency-domain resources of the first physical channel are determined based on a first frequency-domain interval, the first frequency-domain interval being determined based on the second frequency-domain resource indication information and the first SCS; or
the frequency-domain resources of the first physical channel are determined based on the second frequency-domain resource indication information, the first SCS and a second SCS, the second SCS being an SCS corresponding to the first physical channel or an SCS corresponding to a first frequency-domain resource set where the first physical channel is located.

19. The method of claim 18, wherein at least one of following is the same for the frequency-domain resources of the first physical channel and the first frequency-domain interval: a starting Resource Block, RB, a number of RBs, or a bandwidth occupied by the RBs.

20. The method of claim 18, wherein
the frequency-domain resources of the first physical channel are determined based on the second frequency-domain resource indication information and a second parameter, the second parameter being associated with the first SCS and the second SCS.

21. The method of any one of claims 1 to 20, wherein the first number of physical channels are used for repetition of a first Transport Block, TB, a Transport Block Size, TBS, of the first TB being determined according to following parameters of a fifth physical channel: a number of time-domain resources, a number of frequency-domain resources, and a Modulation and Coding Scheme, MCS.

22. The method of claim 21, wherein the fifth physical channel is one of:
a physical channel in a frequency-domain resource set having a smallest sequence number among a second number of frequency-domain resource sets where the first number of physical channels are located;
a physical channel in a frequency-domain resource set having a largest sequence number among the second number of frequency-domain resource sets;
a physical channel in a frequency-domain resource set having a smallest SCS among the second number of frequency-domain resource sets;
a physical channel in a frequency-domain resource set having a largest SCS among the second number of frequency-domain resource sets;
a physical channel in one frequency-domain resource set configured by the network device among the second number of frequency-domain resource sets;
a physical channel having an earliest starting time among the first number of physical channels; or
a physical channel indicated by the network device.

23. The method of any one of claims 1 to 22, wherein an MCS corresponding to the first physical channel is different from an MCS corresponding to the second physical channel.

24. The method of any one of claims 1 to 23, wherein Redundancy Version, RV, information of each of the first number of physical channels is configured by fifth configuration information, the fifth configuration information being determined by a sending device that sends the first number of physical channels.

25. The method of any one of claims 1 to 23, wherein RV information of the first physical channel is determined according to an index of the first physical channel.

26. The method of claim 25, wherein the index of the first physical channel is determined according to time-domain positions of the time-domain resources of the first physical channel and frequency-domain positions of the frequency-domain resources of the first physical channel.

27. The method of claim 26, wherein an indexing manner of the first number of physical channels comprises one of:
indexing according to an ending position of the time-domain resources firstly and then according to the positions of the frequency-domain resources; or
indexing according to the positions of the frequency-domain resources firstly and then according to the ending position of the time-domain resources.

28. The method of any one of claims 1 to 27, wherein a second number of frequency-domain resource sets where the first number of physical channels are located satisfy at least one of:
the second number of frequency-domain resource sets correspond to a same serving cell;
the second number of frequency-domain resource sets correspond to a same Hybrid Automatic Repeat reQuest, HARQ, entity;
one of the second number of frequency-domain resource sets is used for the terminal device to detect an SSB or receive system information; or
the second number of frequency-domain resource sets are configured by a network device.

29. A method for data transmission, comprising:
sending or receiving, by a network device, a first number of physical channels, wherein the first number of physical channels comprise a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

30. The method of claim 29, wherein the first number of physical channels comprise a third physical channel and a fourth physical channel, frequency-domain resources of the third physical channel and frequency-domain resources of the fourth physical channel belong to a same frequency-domain resource set, and time-domain resources of the third physical channel are different from time-domain resources of the fourth physical channel.

31. The method of claim 29 or 30, wherein a manner of determining the time-domain resources of the first physical channel comprises one of:
determining based on one of at least two pieces of first time-domain resource indication information comprised in first configuration information; and
determining based on one piece of second time-domain resource indication information comprised in second configuration information.

32. The method of claim 31, wherein a number of pieces of first time-domain resource indication information comprised in the first configuration information is less than or equal to the first number.

33. The method of claim 31 or 32, wherein
one piece of the first time-domain resource indication information is used for indicating time-domain resources of one physical channel; or
one piece of the first time-domain resource indication information is used for determining time-domain resources of one or more physical channels sent/received in one frequency-domain resource set.

34. The method of claim 31, wherein the time-domain resources of the first physical channel is determined based on the second time-domain resource indication information and a first SubCarrier Spacing, SCS.

35. The method of claim 34, wherein the time-domain resources of the first physical channel belong to a first time-domain interval, and the first time-domain interval is determined based on the second time-domain resource indication information and the first SCS; or
the time-domain resources of the first physical channel is determined based on the second time-domain resource indication information, the first SCS, and a second SCS, the second SCS being an SCS corresponding to the first physical channel or an SCS corresponding to a first frequency-domain resource set where the first physical channel is located.

36. The method of claim 35, wherein if the time-domain resources of the first physical channel belong to the first time-domain interval:
the time-domain resources of the first physical channel are time-domain resources within the first time-domain interval; or
the time-domain resources of the first physical channel are available time-domain resources within the first time-domain interval; or
the time-domain resources of the first physical channel are time-domain resources belonging to one time-domain unit within the first time-domain interval; or
the time-domain resources of the first physical channel are available time-domain resources belonging to one time-domain unit within the first time-domain interval.

37. The method of claim 36, wherein the available time-domain resources within the first time-domain interval are time-domain resources other than unavailable time-domain resources within the first time-domain interval, and the unavailable time-domain resources comprise at least one of:
a symbol with a conflicting transmission direction;
a symbol occupied by a Synchronizing Signal Block, SSB;
an unavailable symbol configured by a network device;
a symbol occupied by a reference signal; or
a symbol occupied by a Control-Resource Set, CORESET.

38. The method of claim 36 or 37, wherein if a number of symbols comprised in the time-domain resources belonging to one time-domain unit within the first time-domain interval or comprised in the available time-domain resources belonging to one time-domain unit within the first time-domain interval is less than a third number, the time-domain resources belonging to one time-domain unit within the first time-domain interval or the available time-domain resources belonging to one time-domain unit within the first time-domain interval are not used for receiving or sending the first physical channel.

39. The method of claim 35, wherein the time-domain resources of the first physical channel are determined based on the second time-domain resource indication information and a first parameter, the first parameter being associated with the first SCS and the second SCS.

40. The method of any one of claims 29 to 39, wherein a manner of determining the frequency-domain resources of the first physical channel comprises one of:
determining based on one of at least two pieces of first frequency-domain resource indication information comprised in third configuration information; or
determining based on one piece of second frequency-domain resource indication information comprised in fourth configuration information.

41. The method of claim 40, wherein a number of pieces of first frequency-domain resource indication information comprised in the third configuration information is less than or equal to the first number.

42. The method of claim 40 or 41, wherein
one piece of the first frequency-domain resource indication information is used for determining frequency-domain resources of one or more physical channels sent/received in one frequency-domain resource set.

43. The method of claim 40, wherein the frequency-domain resources of the first physical channel are determined based on/according to the second frequency-domain resource indication information and a first SCS.

44. The method of any one of claims 34 to 39 and 43, wherein the first SCS is configured by a network device, agreed in a protocol, or determined according to an agreed first rule.

45. The method of claim 44, wherein the first rule comprises:
a smallest SCS or largest SCS among at least two SCSs corresponding to the first number of physical channels; or
a smallest SCS or largest SCS among at least two SCSs corresponding to a second number of frequency-domain resource sets where the first number of physical channels are located; or
an SCS corresponding to a frequency-domain resource set having a largest or smallest sequence number among the second number of frequency-domain resource sets where the first number of physical channels are located.

46. The method of claim 45, wherein
the frequency-domain resources of the first physical channel are determined based on a first frequency-domain interval, the first frequency-domain interval being based on the second frequency-domain resource indication information and the first SCS; or
the frequency-domain resources of the first physical channel are determined based on the second frequency-domain resource indication information, the first SCS and a second SCS, the second SCS being an SCS corresponding to the first physical channel or an SCS corresponding to a first frequency-domain resource set where the first physical channel is located.

47. The method of claim 46, wherein at least one of following is the same for the frequency-domain resources of the first physical channel and the first frequency-domain interval: a starting Resource Block, RB, a number of RBs, or a bandwidth occupied by the RBs.

48. The method of claim 46, wherein
the frequency-domain resources of the first physical channel are determined based on the second frequency-domain resource indication information and a second parameter, the second parameter being associated with the first SCS and the second SCS.

49. The method of any one of claims 29 to 48, wherein the first number of physical channels are used for repetition of a first Transport Block, TB, a Transport Block Size, TBS, of the first TB being determined according to following parameters of a fifth physical channel: a number of time-domain resources, a number of frequency-domain resources, and a Modulation and Coding Scheme, MCS.

50. The method of claim 49, wherein the fifth physical channel is one of:
a physical channel in a frequency-domain resource set having a smallest sequence number among a second number of frequency-domain resource sets where the first number of physical channels are located;
a physical channel in a frequency-domain resource set having a largest sequence number among the second number of frequency-domain resource sets;
a physical channel in a frequency-domain resource set having a smallest SCS among the second number of frequency-domain resource sets;
a physical channel in a frequency-domain resource set having a largest SCS among the second number of frequency-domain resource sets;
a physical channel in one frequency-domain resource set configured by the network device among the second number of frequency-domain resource sets;
a physical channel having an earliest starting time among the first number of physical channels; or
a physical channel indicated by the network device.

51. The method of any one of claims 29 to 50, wherein an MCS corresponding to the first physical channel is different from an MCS corresponding to the second physical channel.

52. The method of any one of claims 29 to 51, wherein Redundancy Version, RV, information of each of the first number of physical channels is configured by fifth configuration information, the fifth configuration information being determined by a sending device that sends the first number of physical channels.

53. The method of any one of claims 29 to 51, wherein RV information of the first physical channel is determined according to an index of the first physical channel.

54. The method of claim 53, wherein the index of the first physical channel is determined according to time-domain positions of the time-domain resources of the first physical channel and frequency-domain positions of the frequency-domain resources of the first physical channel.

55. The method of claim 53, wherein an indexing manner of the first number of physical channels comprises one of:
indexing according to an ending position of the time-domain resources firstly and then according to the positions of the frequency-domain resources; or
indexing according to the positions of the frequency-domain resources firstly and then according to the ending position of the time-domain resources.

56. The method of any one of claims 29 to 55, wherein a second number of frequency-domain resource sets where the first number of physical channels are located satisfy at least one of:
the second number of frequency-domain resource sets correspond to a same serving cell;
the second number of frequency-domain resource sets correspond to a same Hybrid Automatic Repeat reQuest, HARQ, entity;
one of the second number of frequency-domain resource sets is used for the terminal device to detect an SSB or receive system information; or
the second number of frequency-domain resource sets are configured by a network device.

57. A terminal device comprising:
a first communicating unit, configured to send or receive a first number of physical channels, wherein the first number of physical channels comprise a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

58. A network device, comprising:
a second communicating unit, configured to send or receive a first number of physical channels, wherein the first number of physical channels comprise a first physical channel and a second physical channel, frequency-domain resources of the first physical channel and frequency-domain resources of the second physical channel belong to different frequency-domain resource sets, different frequency-domain resource sets have different frequency-domain resources, the first number is greater than 1, and the first number of physical channels are used for transmission of first information.

59. A terminal device comprising: a processor and a memory, wherein the memory is configured to store computer programs, and the processor is configured to invoke and execute the computer programs stored in the memory, to perform the method of any one of claims 1 to 28.

60. A network device comprising: a processor and a memory, wherein the memory is configured to store computer programs, and the processor is configured to invoke and execute the computer programs stored in the memory, to perform the method of any one of claims 29 to 56.

61. A chip comprising: a processor configured to invoke and execute computer programs from a memory, to cause a device on which the chip is mounted to perform the method of any one of claims 1 to 28, or perform the method of any one of claims 29 to 56.

62. A computer storage medium configured to store computer programs, wherein the execution of the computer programs causes a computer to perform the method of any one of claims 1 to 28, or perform the method of any one of claims 29 to 56.

63. A computer program product comprising computer program instructions, wherein the execution of the computer program instructions causes a computer to perform the method of any one of claims 1 to 28, or perform the method of any one of claims 29 to 56.

64. A computer program, wherein the execution of the computer program causes a computer to perform the method of any one of claims 1 to 28, or perform the method of any one of claims 29 to 56.
